(19) Europäisches Patentamt
European Patent Office
Office européen des brevets

(11) Publication number: **0 215 501 B1**

# (12) EUROPEAN PATENT SPECIFICATION

(45) Date of publication of patent specification: **25.09.91**

(51) Int. Cl.5: **C08F 8/04**, C08F 297/00, C08F 8/00, C08L 53/02, C08L 77/00, C08L 67/00

(21) Application number: **86201375.2**

(22) Date of filing: **04.08.86**

## (54) Modified block copolymers, impact resistant compositions containing the copolymers and a process for producing the copolymers.

(30) Priority: **16.08.85 US 766216**
**16.08.85 US 766215**
**16.08.85 US 766217**
**19.08.85 US 766622**

(43) Date of publication of application:
**25.03.87 Bulletin 87/13**

(45) Publication of the grant of the patent:
**25.09.91 Bulletin 91/39**

(84) Designated Contracting States:
**AT BE CH DE FR GB IT LI NL SE**

(56) References cited:
**EP-A- 0 103 148**
**BE-A- 662 770**
**US-A- 3 109 871**
**US-A- 3 135 716**
**US-A- 3 175 997**
**US-A- 3 700 633**
**US-A- 4 033 888**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Gergen, William Peter**
**11311 Hylander**
**Houston, TX 77070(US)**
Inventor: **Lutz, Robert Gardiner**
**8322 Twining Oaks**
**Spring, TX 77379(US)**
Inventor: **Martin, Michael Kent**
**7333 Windham Way**
**Woodbury, MN(US)**

(74) Representative: **Tuijn, Jan Warnaar et al**
**Shell Internationale Research Maatschappij B.V., Patents, Licensing & Trade Marks Division, P.O. Box 302**
**NL-2501 CH The Hague(NL)**

**EP 0 215 501 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a functionalized selectively hydrogenated block copolymer of the formula $B_n$-$(AB)_oA_p$ where n is 0 or an integer of at least one, o is an integer of at least one and p is 0 or an integer of at least one, A is predominantly a polymerised monoalkenyl-aromatic hydrocarbon block and B prior to hydrogenation is predominantly a polymerized conjugated diene hydrocarbon block.

The invention also relates to impact resistant polymeric compositions and to a process for producing a functionalized selectively hydrogenated block copolymer.

It is known that a block copolymer can be obtained by an anionic copolymerization of a conjugated diene compound and an aromatic vinyl compound by using an organic alkali metal initiator. These types of block copolymers are diversified in characteristics, depending on the content of the aromatic vinyl compound.

When the content of the aromatic vinyl compound is small, the produced block copolymer is a so-called thermoplastic rubber. It is a very useful polymer which shows rubber elasticity in the unvulcanized state and is applicable for various uses, for example as mouldings of shoe sole; impact modifier for polystyrene resins; adhesive; binder.

The block copolymers with a high aromatic vinyl compound content, such as more than 70% by weight, provide a resin possessing both excellent impact resistance and transparency, and such a resin is widely used in the field of packaging. Many proposals have been made on processes for the preparation of these types of block copolymers, for example in US patent specification U.S.-A-3,639,517.

The elastomeric properties of certain aromatic vinyl/conjugated diene block copolymers also appear to be due in part to their degree of branching. While the aromatic vinyl/conjugated diene block copolymers have a basic straight carbon chain backbone, those with elastomeric properties always have pendant alkyl radicals. For example, ethylene-propylene rubber (EPR) has a structure of pendant methyl radicals which appear to provide elasticity and other elastomeric properties. When an essentially unbranched straight chain polymer is formed, such as some polyethylenes, the resulting polymer is essentially non-elastomeric or in other words relatively rigid, and behaves like a typical thermoplastic without possessing rubber-like resilience or high elongation, tensile strength without yield, low set or other properties characteristic of desirable elastomers.

Block copolymers have been produced, see U.S. patent reissue specification 27,145 which comprise primarily those having a general structure

A-B-A

wherein the two terminal polymer blocks A comprise thermoplastic polymer blocks of vinylarenes such as polystyrene, while block B is a polymer block of a selectively hydrogenated conjugated diene. The proportion of the thermoplastic terminal blocks to the centre elastomeric polymer block and the relative molecular weights of each of these blocks is balanced to obtain a rubber having an optimum combination of properties such that it behaves as a vulcanized rubber without requiring the actual step of vulcanization. Moreover, these block copolymers can be designed not only with this important advantage but also so as to be handled in thermoplastic forming equipment and are soluble in a variety of relatively low cost solvents.

While these block copolymers have a number of outstanding technical advantages, one of their principal limitations lies in their sensitivity to oxidation. This was due to their unsaturated character which can be minimized by hydrogenating the copolymer, especially in the centre section comprising the polymeric diene block. Hydrogenation may be effected selectively as disclosed in U.S. patent reissue specification 27,145. These polymers are hydrogenated block copolymers having a configuration, prior to hydrogenation, of A-B-A wherein each of the A's is an alkenyl-substituted aromatic hydrocarbon polymer block and B is a butadiene polymer block wherein 35-55 mol per cent of the butadiene units in the butadiene polymer block have 1,2-microconfiguration.

Due to their hydrocarbon nature, these selectively hydrogenated ABA block copolymers are deficient in many applications in which adhesion to a polar surface is required. Examples include the toughening and compatibilization of polar polymers such as the engineering thermoplastics, the adhesion to high energy substrates of hydrogenated block copolymer elastomer based adhesives, sealants and coatings, and the use of hydrogenated elastomer in reinforced polymer systems. However, the placement onto the block copolymer of functional groups which can provide interactions not possible with hydrocarbon polymers solves the adhesion problem and extends the range of applicability of this material.

Beyond the very dramatic improvement in interface adhesion in polymer blends, a functionalized styrene-ethylene/butylene-styrene (S-EB-S) component can also contribute substantially to the external adhesion characteristics often needed in polymer systems. These include adhesion to fibres and fillers which reinforce the polymer system; adhesion to substrates in adhesives, sealants, and coatings based on

functionalized S-EB-S block copolymers, adhesion of decorations such as printing inks, paints, primers, and metals of systems based on S-EB-S block copolymers; participation in chemical reactions such as binding proteins such as heparin for blood compatibility; surfactants in polar-nonpolar aqueous or non-aqueous dispersions.

Functionalized S-EB-S block copolymer can be described as basically commercially produced S-EB-S block copolymers which are produced by hydrogenation of S-B-S block copolymer to which is chemically attached to either the styrene or the ethylene-butylene block, chemically functional moieties.

Many attempts have been made for the purpose of improving adhesiveness, green strength and other properties functionalizing block copolymers, and various methods have been proposed for functionalizing synthetic conjugated diene rubbers.

U.S.-A-4,292,414 and 4,308,353 describe a monoalkenyl-arene/conjugated diene block copolymer with low 1,2-micro structure content grafted with a maleic acid compound. However, the process is limited to reaction conditions wherein the generation of free radicals is substantially inhibited by using free radical inhibitors or conventional stabilizers for example phenol type, phosphorous type or amine type stabilizers. The processes are limited to thermal addition reactions or the so-called "ENE" reaction. This reaction scheme depends on unsaturation in the base block copolymer for reaction sites. A reasonable amount of residual unsaturation must be present in order to obtain an advantageous degree of functionality or grafting onto the base block copolymer. A substantially completely hydrogenated base block copolymer would not react appreciably in this known process.

European patent application 103,148 describes a similar modified block copolymer with high 1,2-micro structure content however, again produced by the "ENE" reaction.

U.S patent specification 4,033,888 again describes a process for grafting maleic anhydride onto the base block copolymer via the residual aliphatic double bonds contained in said block copolymer ("ENE" reaction).

The "ENE" process as described in the prior art results in a modified polymer product which is substituted at a position on the polymer backbone which is allylic to the double bond. The reaction can be shown for maleic anhydride as follows:

a) to main chain unsaturation

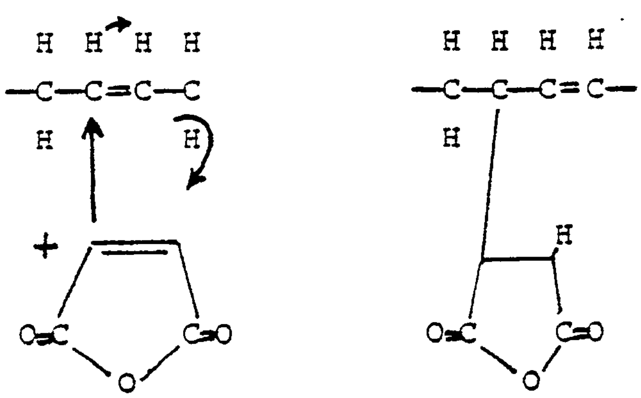

Allylic position

b) to vinyl unsaturation

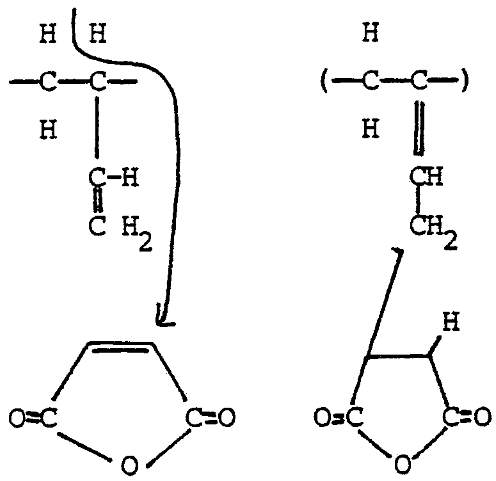

Allylic position

wherein a) represents addition across a double bond in the main chain of the base block copolymer and b) represents addition across a double bond occurring in a side chain. After addition and isomerization the substitution is positioned on a carbon allylic to the double bond.

The allylically substituted block copolymers are prone to thermal degradation due to their thermal instability. It is known in the art that allylic substituents can undergo what has been referred to as a retro-ENE reaction, see B.C. Trivedi, B.M. Culbertson, Maleic Anhydride, (Plenum Press, New York 1982) pp. 172-173.

Further, because the ENE reaction requires a reasonable amount of unsaturation in the precursor base block copolymer as discussed previously, the resulting functional block copolymer product will have a significant amount of residual unsaturation and will be inherently unstable to oxidation.

A functionalized selectively hydrogenated thermoplastic block copolymer has now been found which has excellent appearance properties and mechanical properties, which is thermally stable and which is particularly useful in blending with other polymers.

Accordingly, the present invention provides a functionalized selectively hydrogenated block copolymer of the formula $B_n(AB)_oA_p$ where n is 0 or an integer of at least one, o is an integer of at least one and p is 0 or an integer of at least one, A is predominantly a polymerized monoalkenyl-aromatic hydrocarbon block and B prior to hydrogenation is predominantly a polymerised conjugated diene hydrocarbon block, to which block copolymer has been grafted at least one electrophilic graftable molecule or electrophile characterized in that substantially all of said graftable molecules are grafted to the monoalkenyl-arene block in the block copolymer.

The invention further provides a process for producing a functionalized selectively hydrogenated block copolymer according to the invention which process comprises contacting hydrogenated block copolymers of conjugated dienes and monoalkenyl-aromatic compounds with an alkyllithium compound, and a polar compound selected from the group consisting of tertiary amines and low molecular weight hydrocarbon ethers, to form a backbone block copolymer having active lithium atoms along the polymer chain, and thereafter contacting said backbone block copolymer and at least one electrophilic graftable molecule or electrophile to form backbone block copolymers with grafted molecules attached wherein substantially all of said graftable molecules which have been grafted are grafted to the block copolymer in the vinylarene block.

According to six preferred embodiments of the present invention:-

(1) each A is predominantly a polymerized monoalkenyl-aromatic hydrocarbon block having an average molecular weight in the range of from 1,000 to 115,000;

(2) each polymerized conjugated diene hydrocarbon block has an average molecular weight in the range of from 20,000 to 450,000;

(3) the blocks A constitute in the range of from 1 to 95 per cent by weight of the block copolymer;

(4) the unsaturation of the block B is less than 10% of the original unsaturation;

(5) the unsaturation of the A blocks is above 50% of the original unsaturation; and

(6) the grafted molecule contains one or more functional groups.

The feature of the present invention lies in providing modified block copolymers which are thermally stable; have a low residual unsaturation, are excellent in appearance characteristics, melt-flow characteristics, and mechanical properties such as tensile strength and impact resistance and are particularly useful in blending with other polymers.

The modified block copolymers according to the present invention are grafted or substituted in the monoalkenyl-aromatic hydrogen block as shown in the exemplary reactions given below:

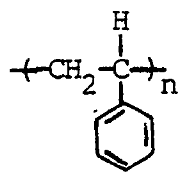

RLi · Amine + $CO_2$

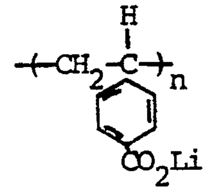

para

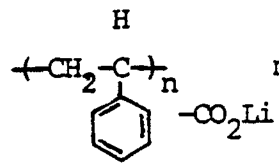

meta

in which: RLi = Alkyl-Lithium

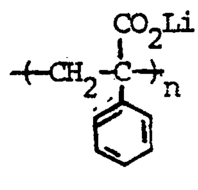

benzylic (minor product)

The structure of the substituted block copolymer specifically determined by the location of the functionality on the polymer backbone in the monoalkenyl-aromatic hydrocarbon block gives the block copolymer a substantially greater degree of thermal stability.

Block copolymers of conjugated dienes and monoalkenyl-aromatic hydrocarbons which may be utilized include any of those which exhibit elastomeric properties and those which have 1,2-Microstructure contents prior to hydrogenation suitably in the range of from 7% to 100% and preferably of from 35% to 50%. Such block copolymers may be multiblock copolymers of varying structures containing various ratios of conjugated dienes to monoalkenyl-aromatic hydrocarbons including those containing up to 60 per cent by weight of monoalkenyl-aromatic hydrocarbon. Thus, multiblock copolymers may be utilized which are linear or radial symmetric or asymmetric and which have structures represented by the formulae A-B, A-B-A, A-B-A-B, B-A, B-A-B, B-A-B-A, $(AB)_{0,1,2..}$ BA and the like wherein A is a polymer block of a monoalkenyl-aromatic hydrocarbon or a conjugated diene/monoalkenyl-aromatic hydrocarbon tapered copolymer block and B is a polymer block of a conjugated diene.

Block A preferably has an average molecular weight in the range of from 500 to 60,000 and block B preferably has an average molecular weight in the range of from 35,000 to 150,000.

The block copolymers may be produced by any well known block polymerization or copolymerization procedures including the well known sequential addition of monomer techniques, incremental addition of monomer technique or coupling technique as illustrated in, for example, U.S. patent specifications Nos. 3,251,905; 3,390,207; 3,598,887 and 4,219,627. As is well known in the block copolymer art, tapered copolymer blocks can be incorporated in the multiblock copolymer by copolymerizing a mixture of conjugated diene and monoalkenyl-aromatic hydrocarbon monomers utilizing the difference in their copolymerization reactivity rates. Various patent specifications describe the preparation of multiblock copolymers containing tapered copolymer blocks including U.S. patent specifications Nos. 3,251,905; 3,265,765; 3,639,521 and 4,208,356 the disclosures of which are incorporated herein by reference.

Conjugated dienes which may be utilized to prepare the polymers and copolymers are those having from 4 to 8 carbon atoms per molecule and include 1,3-butadiene, 2-methyl-1,3-butadiene (isoprene), 2,3-dimethyl-1,3-butadiene, 1,3-pentadiene, 1,3-hexadiene, and the like. Mixtures of such conjugated dienes may also be used. The preferred conjugated diene is 1,3-butadiene.

The polymer blocks A are prior to hydrogenation preferably polymer blocks of a monoalkenyl-aromatic hydrocarbon, more preferably of a vinyl-aromatic hydrocarbon. Vinyl-aromatic hydrocarbons which may be

utilized to prepare copolymers include styrene, o-methylstyrene, p-methylstyrene, p-tert-butylstyrene, 1,3-dimethylstyrene, alpha-methylstyrene, vinylnapthalene, vinylanthracene and the like. The preferred vinyl-aromatic hydrocarbon is styrene. The block copolymer is preferably a styrene-ethylene/butylene-styrene block copolymer.

It should be observed that the above-described block copolymers may, if desired, be readily prepared by the methods set forth hereinbefore. However, since many of these block copolymers are commercially available, it is usually preferred to employ the commercially available block copolymer as this serves to reduce the number of processing steps involved in the overall process. The hydrogenation of these block copolymers may be carried out by a variety of well established processes including hydrogenation in the presence of such catalysts as Raney Nickel, noble metals such as platinum and palladium and soluble transition metal catalysts. Suitable hydrogenation processes which can be used are ones wherein the diene-containing block copolymer is dissolved in an inert hydrocarbon diluent such as cyclohexane and hydrogenated by reaction with hydrogen in the presence of a soluble hydrogenation catalyst. Such processes are disclosed in U.S. patent specifications Nos. 3,113,986 and 4,226,952, the disclosures of which are incorporated herein by reference. The block copolymers are hydrogenated in such a manner as to produce hydrogenated block copolymers having a residual unsaturation content in the polydiene block preferably in the range of from 0.5 to 20 and more preferably from 0.5 to 10 per cent of their original unsaturation content prior to hydrogenation. Most preferably the unsaturation of block B has been reduced to a value of less than 5 per cent of its original value. According to another preferred embodiment of the present invention an average of more than 25% of the monoalkenyl-aromatic hydrocarbon units have been hydrogenated. The average unsaturation of the hydrogenated block copolymer preferably has been reduced to a value less than 20% of its original value. According to a further preferred embodiment an average of less than 10% of the monoalkenyl-aromatic hydrocarbon units have been hydrogenated. Furthermore, the blocks A preferably comprise in the range of from 1 to 40 per cent by weight of the block copolymer.

In general, any materials having the ability to react with the lithiated base block copolymer, are operable for the purposes of this invention.

In order to incorporate functional groups into the base block copolymer, reactants capable of reacting with the lithiated base block copolymer are necessary. These reactants may be polymerizable or nonpolymerizable, however, preferred reactants are nonpolymerizable or slowly polymerizing.

The graft reaction involves nucleophilic attack of a polymer bound lithium alkyl or an electrophile.

The class of preferred electrophiles which will form graft block copolymers within the scope of the present invention include reactants from the following groups:- carbon dioxide, ethylene oxide, aldehydes, ketones, carboxylic acids and salts and esters thereof, arylhalides, epoxides, sulphur, boron alkoxides, isocyanates, sulphonates and various silicon compounds.

These electrophiles may contain appended functional groups as in the case of N,N-dimethyl-p-aminobenzaldehyde where the amine is an appended functional group and the aldehyde is the reactive electrophile. Alternatively, the electrophile may react to become the functional site itself; as an example, carbon dioxide (electrophile) reacts with the metalated block copolymer to form a carboxylate functional group. By these routes, block copolymers could be prepared containing grafted sites selected from one or more of the following groups of functionality type carboxylic acids, their salts and esters, ketones, alcohols and alkoxides, amines, amides, thiols, borates, and functional groups containing a silicon atom.

These functionalities can be subsequently reacted with other modifying materials to produce new functional groups. For example, the grafted carboxylic acid described hereinbefore could be suitably modified by esterifying the resulting acid groups in the graft by appropriate reaction with hydroxy-containing compounds of varying carbon atoms lengths. In some cases, the reaction could take place simultaneously with the grafting process but in most examples it would be practised in subsequent post modification reaction.

The grafted block copolymer will usually contain in the range of from 0.02 to 20, preferably 0.1 to 10, and most preferably 0.2 to 5 weight per cent of grafted portion.

The block copolymers, as modified can still be used for any purpose for which an unmodified material (base block copolymer) was formerly used. That is, they can be used for adhesives and sealants, or compound and extruded and moulded in any convenient manner.

The block copolymers may be prepared by any convenient manner. An example of a method to incorporate functional groups into the base polymer primarily in the monoalkenyl-arene block is metalation.

Metalation is conveniently carried out by means of a complex formed by the combination of a lithium component which can be represented by $R'(Li)_x$ with a polar metalation promoter. The polar compound and the lithium component can be added separately or can be premixed or pre-reacted to form an adduct prior to addition to the solution of the hydrogenated block copolymer. In the compounds represented by $R'(Li)_x$,

the R' is usually a saturated hydrocarbon radical of any length whatsoever, but ordinarily containing up to 20 carbon atoms, and can be an aromatic radical such as phenyl, naphthyl, tolyl, 2-methylnaphthyl, etc., or a saturated cyclic hydrocarbon radical of e.g. 5 to 7 carbon atoms, a mono-unsaturated cyclic hydrocarbon radical of 5 to 7 carbon atoms, an unconjugated, unsaturated aliphatic hydrocarbon radical of 1 to 20 carbon atoms, or an alkyllithium having one or more aromatic groups on the alkyl group, the alkyl group containing 1 to 20 carbon atoms. In the formula, $R'(Li)_x$ is an integer of 1 to 3. Representative species include, for example: methyllithium, isopropyllithium, sec-butyllithium, n-butyllithium, t-butyllithium, n-dodecyllithium, 1,4-dilithiobutane, 1,3,5-trilithiopentane, and the like. The lithium-alkyls must be more basic than the product metalated alkyl. Of course, other alkali metal or alkaline earth metal alkyls could be used but the lithium-alkyls are preferred due to their ready commercial availability. In a similar way, metal hydrides could be employed as the metalation reagent but the hydrides have only limited solubility in the appropriate solvents. Therefore, the metal-alkyls are preferred for their greater solubility which makes them easier to process.

Lithium compounds alone usually metalate block copolymers containing aromatic and olefinic functional groups with considerable difficulty and under high temperatures which may tend to degrade the block copolymer. However, in the presence of polar metallation promoters, such as tertiary diamines and bridgehead monoamines, metalation proceeds rapidly and smoothly. Some lithium compounds can be used alone effectively, notably the methyllithium types.

It has been shown that the metalation occurs at a carbon to which an aromatic group is attached, or on an aromatic group, or in more than one of these positions. In any event, it has been shown that a very large number of lithium atoms are positioned variously along the polymer chain, attached to internal carbon atoms away from the polymer terminal carbon atoms, either along the backbone of the block copolymer or on groups pendant therefrom, or both, in a manner depending upon the distribution of reactive or lithiatable positions. This distinguishes the lithiated block copolymer from simple terminally reactive polymers prepared by using a lithium or even a polylithium initiator in polymerization thus limiting the number and the location of the positions available for subsequent attachment. With the metalation procedure described herein, the extent of the lithiation will depend upon the amount of metallating agent used and/or the groups available for metallation. The use of a more basic lithium-alkyl such as tert-butyllithium may not require the use of a polar metallation promoter.

The polar metallation promoters include a variety of tertiary amines, bridgehead amines, ethers, and metal alkoxides.

The tertiary amines useful in the metalation step have three saturated aliphatic hydrocarbon groups attached to each nitrogen and include, for example:-

(a) Chelating tertiary diamines, preferably those of the formula $(R^2)_2N\text{-}C_yH_{2y}\text{-}N(R^2)_2$ in which each $R^2$ can be the same or different straigt- or branched-chain alkyl group of any chain length containing up to 20 carbon atoms or more all of which are included herein and can be any whole number from 2 to 10, and particularly the ethylene diamines in which all alkyl substituents are the same. These include, for example: $N,N,N^1,N^1$-tetramethylethylenediamine (which is preferred), tetraethylethylenediamine, tetradecylenediamine, tetraoctylhexylenediamine, tetra-(mixed alkyl) ethylenediamines, and the like.

(b) Cyclic diamines can be used, such as, for example, the $N,N,N^1,N^1$-tetraalkyl-1,2-diamino-cyclohexanes, the $N,N,N^1,N^1$-tetraalkyl-1,4-diamino-cyclohexanes, $N,N^1$-dimethylpiperazine, and the like.

(c) The useful bridgehead diamines include, for example, sparteine, triethylenediamine, and the like.

Tertiary monoamines such as triethylenediamine are generally not as effective in the lithiation reaction. However, bridgehead monoamines such as 1-azabicyclo[2.2.2]octane and its substituted homologues are effective.

Ethers and the alkali metal alkoxides are presently less preferred than the chelating amines as polar promoters for the metallation reaction due to somewhat lower levels of incorporation of functional group containing compounds onto the block copolymer backbone in the subsequent grafting reaction.

In general, it is most desirable to carry out the lithiation reaction in an inert solvent such as saturated hydrocarbons. Aromatic solvents such as benzene are lithiatable and may interfere with the desired lithiation of the hydrogenated copolymer. The solvent/copolymer weight ratio which is convenient generally is in the range of about 5:1 to 20:1. Solvents such as chlorinated hydrocarbons, ketones, and alcohols, should not be used because they destroy the lithiating compound.

Polar metalation promoters may be present in an amount sufficient to enable metalation to occur, e.g. amounts between 0.01 and 100 or more, preferably between 0.1 to 10 and most preferably between 1 and 3 equivalents per equivalent of lithium-alkyl.

The equivalents of lithium employed for the desired amount of lithiation generally range from such as 0.001 to 3 per monoalkenyl-arene unit in the block copolymer, presently preferably 0.01 to 1.0 equivalents per monoalkenyl-arene unit in the block copolymer to be modified. The molar ratio of active lithium to the

polar promoter can vary from such as 0.01 to 10.0. A preferred ratio is 0.5.

The amount of alkyl-lithium employed can be expressed in terms of the Li/monoalkenyl-arene molar ratio. This ratio may range from a value of 1 (one lithium alkyl per monoalkenyl-arene unit) to as low as 1 x $10^{-3}$ (1 lithium alkyl per 1000 monoalkenyl-arene units).

In general, it is most desirable to carry out the lithiation reaction in an inert solvent such as saturated hydrocarbons. Aromatic solvents such as benzene are lithiatable and may interfere with the desired lithiation of the hydrogenated block copolymer. The solvent block copolymer weight ratio which is convenient generally is in the range of about 5:1 to 20:1. Solvents such as chlorinated hydrocarbons, ketones, and alcohols, should not be used because they destroy the lithiating compound.

The process of lithiation can be carried out at temperatures in the range of such as about -70° C to +150° C, presently preferably in the range of about 25° C to 80° C, the upper temperatures being limited by the thermal stability of the lithium compounds. The lower temperatures are limited by considerations of production cost, the rate of reaction becoming unreasonably slow at low temperatures. The length of time necessary to complete the lithiation and subsequent reactions is largely dependent upon mixing conditions and temperature. Generally the time can range from a few seconds to about 72 hours, presently preferably from about 1 minute to 1 hour.

The next step in the process of preparing the modified block copolymer is the treatment of the lithiated hydrogenated block copolymer, in solution, without quenching in any manner which would destroy the lithium sites, with a species capable of reacting with a lithium anion. These reactive species are selected from the class of molecules called electrophiles. The most preferred electrophiles have been listed hereinbefore. These electrophiles either contain or form upon reaction with the polymer bound lithium anion the desired functional groups. Such species contain functional groups including but not limited to

| | | | |
|---|---|---|---|
| 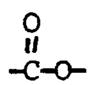 | carboxyl | $C-NR_2$ | Amine |
| C-OH | hydroxyl | 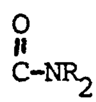 | Amide |
| C-OR | ether | C-SH | Thiol |
| 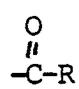 | ketone | $C-B(OR)_2$ | Borane Containing |
| 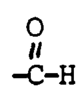 | aldehyde | 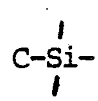 | Silicon Containing |

Further embodiments of the invention can be found in claims 21-30.

The process also includes further chemistry on the modified block copolymer. For example, converting of a carboxylic acid salt containing modified block copolymer to the carboxylic acid form can be easily accomplished.

The impact resistant polymeric compositions to which the invention also relates contain thermoplastic polyamides, such as nylon 6,6 or thermoplastic polyesters such as poly(1,4-butylene-terephthalate) (PBT) and poly(ethylene terephthalate) (PET). Both are a class of materials which possess a good balance of properties comprising strength and stiffness which make them useful as structural materials. However, for a particular application, a thermoplastic polyamide or thermoplastic polyester may not offer the combination of properties desired, and therefore, means to correct this deficiency are of interest.

One major deficiency of thermoplastic polyamides and polyesters is their poor resistance to impact, especially when dry. A particularly appealing route to achieving improved impact resistance in a thermoplastic is by blending it with another polymer. It is well known that stiff plastics can often be impact

modified by addition of an immiscible low modulus rubber. However, in general, physical blending of polymers has not been a successful route to toughen thermoplastic polyamides and polyesters. This is due to the poor adhesion immiscible polymers typically exhibit with each other. As a result, interfaces between blend component domains represent areas of severe weaknesses, providing natural flows which result in facile mechanical failure.

It is well known to those skilled in the art that hydrogenated block copolymers of styrene and butadiene possess many of the properties which are required for impact modification of plastics. They have a low glass transition, low modulus rubber phase which is required for toughening. Because they contain little unsaturation, they can be blended with high processing temperature plastics without degrading. In addition, they are unique compared to other rubbers in that they contain blocks which are microphase separated over application and processing conditions. This microphase separation results in physical crosslinking, causing elasticity in the solid and molten states. Such an internal strength mechanism is often required to achieve toughness in the application of plastic impact modification. In addition, melt elasticity of the block copolymer during processing can, under the right conditions, enable it to be finely dispersed with another polymer in a stable inter-penetrating co-continuous phase structure. A stable, fine dispersion is desirable in a rubber modified plastic.

Proof that hydrogenated block copolymers of styrene and butadiene are useful plastic impact modifiers can be seen in their widespread use for modifying polyolefins and polystyrene. For these blends, interfacial adhesion is great enough to achieve toughening.

Although the hydrogenated block copolymers do have many of the characteristics required for plastic impact modification, they are deficient in modifying many materials which are dissimilar in structure to styrene or hydrogenated butadiene. Blends of the hydrogenated block copolymer with dissimilar plastics are often not tough due to a lack of interfacial adhesion.

A route to achieve interfacial adhesion between the hydrogenated block copolymer and a dissimilar material is by chemically attaching to the block copolymer functional moieties which interact with the dissimilar material. Such interactions include chemical reaction, hydrogen bonding, and dipole-dipole interactions.

Epstein in U.S. Patent 4,174,358 discloses a broad range of low modulus polyamide modifiers. However, this patent does not disclose or suggest the use of modified block copolymers of styrene and butadiene.

It has been previously proposed to increase the impact strength of polyamides and polyesters by addition of a modified block copolymer. U.S. patent specification 4,427,828 and International Kokai Application No. W083/00492 disclose blends of thermoplastic polyamide or polyester with a modified block copolymer. Specifically, the block copolymer is a partially hydrogenated monovinyl aryl/conjugated diene to which is attached anhydride moieties by the "ENE" reaction described hereinbefore.

According to the present invention, there is further provided an impact resistant blend of a thermoplastic polyamide or a thermoplastic polyester and a thermally stable modified selectively hydrogenated monoalkenyl-aromatic/conjugated diene block wherein at least one functional group is grafted primarily to the monoalkenyl-arene block in the block copolymer. Preferred are impact resistant polymeric compositions comprising:-

(a) in the range of from 50 to 97 per cent of a polyamide having a number average molecular weight of at least 5,000, or of a thermoplastic polyester, and

(b) in the range of from 3 to 50 per cent by weight of a functionalized selectively hydrogenated block copolymer according to the present invention.

The polyamide matrix resin of the toughened compositions of this invention is well known in the art and embraces those semi-crystalline and amorphous resins having a molecular weight of at least 5,000 and commonly referred to as nylons. Suitable polyamides include those described in U.S. patent specifications Nos. 2,071,250; 2,071,251; 2,130,523; 2,130,948; 2,241,322; 2,312,966; 2,512,606; and 3,393,210. The polyamide resin can be produced by condensation of equimolar amounts of a saturated dicarboxylic acid containing from 4 to 12 carbon atoms with a diamine, in which the diamine contains from 4 to 14 carbon atoms. Excess diamine can be employed to provide an excess of amine end groups over carboxyl end groups in the polyamide. Examples of polyamides include polyhexamethylene adipamide (nylon 66), polyhexamethylene azelaamide (nylon 69), polyhexamethylene sebacamide (nylon 610), polyhexamethylene isophthalamide and polyhexamethylene dodecanoamide (nylon 612), the polyamide produced by ring opening of lactams, i.e., polycaprolactam, polylauric lactam, poly-11-aminoundecanoic acid, bis-(paraaminocyclohexyl) methane dodecanoamide. It is also possible to use in this invention polyamides prepared by the copolymerization of two of the above polymers or terpolymerization of the above polymers or their components, e.g., for example, an adipic isophthalic acid hexamethylene diamine copolymer or

polyhexamethylene tere-co-isophthalamide. Preferably the polyamides are linear with a melting point in excess of 200 °C. As great as 97 per cent by weight of the composition can be composed of polyamide, for example from 60 to 95 per cent; however, preferred compositions contain from 70 to 95 per cent, and more narrowly 75 to 90 per cent, for example 80 to 90 by weight of polyamide.

The thermoplastic polyesters employed in this invention have a generally crystalline structure, a melting point over about 120 °C, and are thermoplastic as opposed to thermosetting.

One particularly useful group of polyesters are those thermoplastic polyesters prepared by condensing a dicarboxylic acid or a lower alkyl ester thereof, acid halide, or anhydride derivative thereof with a glycol, according to methods well-known in the art.

Among the aromatic and aliphatic dicarboxylic acids suitable for preparing polyesters useful in the present invention are oxalic acid, malonic acid, succinic acid, glutaric acid, adipic acid, suberic acid, azelaic acid, subacic acid, terephthalic acid, isophthalic acid, p-carboxyphenoacetic acid, p,p'-dicarboxydiphenyl, p,p'-dicarboxydiphenylsulphone, p-carboxyphenoxyacetic acid, p-carboxyphenoxypropionic acid, p-carboxyphenoxybutyric acid, p-carboxyphenoxyvaleric acid, p-carboxyphenoxyhexanoic acid, p,p'-dicarboxydiphenylpropane, p,p'dicarboxydiphenyloctane, 3-alkyl-4-(β-carboxyethoxy)-benzoic acid, 2,6-naphthalene dicarboxylic acid, 2,7-naphthalenedicarboxylic acid, and the like. Mixtures of dicarboxylic acids can also be employed. Terephthalic acid is particularly preferred.

The glycols suitable for preparing the polyesters useful in the present invention include straight chain alkylene glycols of 2 to 12 carbon atoms such as ethylene glycol, 1,3-propylene glycol, 1,6-hexylene glycol, 1,10-decamethylene glycol, 1,12-dodecamethylene glycol and the like. Aromatic glycols can be substituted in whole or in part. Suitable aromatic dihydroxy compounds include p-xylylene glycol, pyrocatechol, resorcinol, hydroquinone, or alkyl-substituted derivatives of these compounds. Another suitable glycol is 1,4-cyclohexane dimethanol. Much preferred glycols are the straight chain alkylene glycols having 2 to 4 carbon atoms.

A preferred group of polyesters are poly(ethylene terephthalate), poly(propylene terephthalate), and poly(butylene terephthalate). A much preferred polyester is poly(butylene terephthalate). Poly(butylene terephthalate), a crystalline copolymer, may be formed by the polycondensation of 1,4-butanediol and dimethylterephthalate or terephthalic acid, and has the general formula:

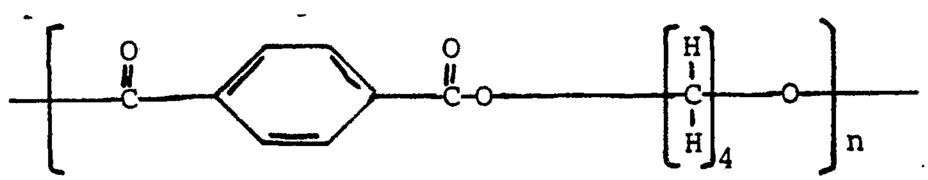

where n varies from 70 to 140. The molecular weight of the poly(butylene terephthalate) typically varies from about 20,000 to about 25,000. A suitable process for manufacturing the polymer is disclosed in British patent specification No. 1,305,130.

Commercially available poly(butylene terephthalate) is available from General Electric under the tradename VALOX® thermoplastic polyester. Other commercial polymers include CELANEX® from Celanese, TENTITE® from Eastman Kodak, and VITUF® from Goodyear Chemical.

Other useful polyesters include the cellulosics. The thermoplastic cellulosic esters employed herein are widely used as moulding, coating and film-forming materials and are well known. These materials include the solid thermoplastic forms of cellulose nitrate, cellulose acetate (e.g. cellulose diacetate, cellulose triacetate), cellulose butyrate, cellulose acetate butyrate, cellulose propionate, cellulose tridecanoate, carboxymethyl cellulose, ethyl cellulose, hydroxyethyl cellulose and acetylated hydroxyethyl cellulose as described on pages 25-28 of Modern Plastics Encyclopedia, 1971-72, and references listed therein.

Another useful polyester is polypivalolactone. Polypivalolactone is a linear polymer having recurring ester structural units mainly of the formula:

$$-CH_2-C(CH_3)_2-C(O)O-$$

i.e., units derived from pivalolactone. Preferably, the polyester is a pivalolactone homopolymer. Also included, however, are the copolymers of pivalolactone with not more than 50 mol per cent, preferably not more than 10 mol per cent of other beta-propiolactones, such as beta-propiolactone, alpha, alpha-diethyl-beta-propiolactone and alpha-methyl-alpha-ethyl-beta-propiolactone. The term "beta-propiolactones" refers to beta-propiolactone (2-oxetanone) and to derivatives thereof which carry no substituents at the beta-carbon atom of the lactone ring. Preferred beta-propiolactones are those containing a tertiary or quaternary carbon atom in the alpha position relative to the carbonyl group. Especially preferred are the alpha, alpha-dialkyl-beta-propiolactones wherein each of the alkyl groups independently has from one to four carbon atoms. Examples of useful monomers are:
alpha-ethyl-alpha-methyl-beta-propiolactone,
alpha-methyl-alpha-isopropyl-beta-propiolactone,
alpha-ethyl-alpha-n-butyl-beta-propiolactone,
alpha-chloromethyl-alpha-methyl-beta-propiolactone, alpha,
alpha-bis-(chloromethyl)-beta-propiolactone, and
alpha, alpha-dimethyl-beta-propiolactone (pivalolactone).

See generally U.S. patent specifications No. 3,259,607; 3,299,171; and 3,579,489. These polypivalolactones have a molecular weight in excess of 20,000 and a melting point in excess of 120 °C.

Another useful polyester is polycaprolactone. Typical poly($\epsilon$-caprolactones) are substantially linear polymers in which the repeating unit is

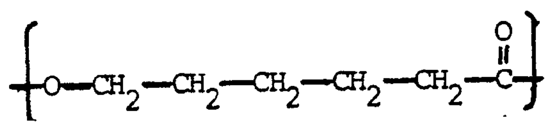

These polymers have similar properties as the polypivalolactones and may be prepared by a similar polymerization mechanism. See generally U.S. patent specification No. 3,259,607.

Linear and branched polyesters and copolyesters of glycols and terephthalic or isophthalic acid have been commercially available for a number of years and have been described by Whinfield et al in U.S. patent specification 2,465,319 and by Pengilly in U.S. patent specification 3,047,539.

Thermoplastic polyesters such as PBT and PET are useful as injection mouldable materials which can be formed into articles which exhibit a good balance of properties including strength and stiffness. An improvement in impact strength of these materials is desirable, however.

The compositions according to the present invention may contain a thermoplastic polyamide as well as a thermoplastic polyester.

The toughened compositions of this invention can be prepared by melt blending, in a closed system, a polyamide or polyester and at least one modified block copolymer into a uniform mixture in a multi-screw extruder such as a Werner Pfleiderer extruder having generally 2-5 kneading blocks and at least one reverse pitch to generate high shear, or other conventional plasticating devices such as a Brabender, Banbury mill, or the like. Alternatively, the blends may be made by coprecipitation from solution, blending or by dry mixing together of the components followed by melt fabrication of the dry mixture by extrusion.

The modified polyamide and polyester blends of the present invention resin may be prepared by melt-blending from 50 per cent to 97 per cent by weight preferably from 70 per cent to 95 per cent or more preferably 75 per cent to 90 per cent of the polyamide or polyester, and from 3 per cent to 50 per cent by weight preferably from 5 per cent to 30 per cent or more preferably 10 per cent to 25 per cent functionalized block copolymer.

The compositions of the invention may be modified by one or more conventional additives such as stabilizers and inhibitors of oxidative, thermal, and ultraviolet light degradation; lubricants and mould release agents, colourants including dyes and pigments, fibrous and particulate fillers and reinforcements, nucleating agents, plasticizers, etc.

The stabilizers can be incorporated into the composition at any stage in the preparation of the thermoplastic composition. Preferably the stabilizers are included early to preclude the initiation of degradation before the composition can be protected. Such stabilizers must be compatible with the composition.

The oxidative and thermal stabilizers useful in the materials of the present invention include those used in addition polymers generally. They include, for example, up to 1 per cent by weight, based on the weight of polyamide or polyester of Group I metal halides, e.g., sodium, potassium, lithium with cuprous halides, e.g., chloride, bromide, iodide, sterically hindered phenols, hydroquinones, and varieties of substituted members of those groups and combinations thereof.

The ultraviolet light stabilizers, e.g., up to 2.0 per cent, based on the weight of polyamide, can also be those used in addition polymers generally. Examples of ultraviolet light stabilizers include various substituted resorcinols, salicylates, benzotriazoles, benzophenones, and the like.

Suitable lubricants and mould release agents, e.g., up to 1.0 per cent, based on the weight of the

composition, are stearic acid, stearic alcohol, stearamides, organic dyes such as nigrosine, etc., pigments, e.g., titanium dioxide, cadmium sulphide, cadmium sulphide selenide, phthalocyamines, ultramarine blue, carbon black, etc. up to 50 per cent, based on the weight of the composition, of fibrous and particulate fillers and reinforcements, e.g., carbon fibres, glass fibres, amorphous silica, asbestos, calcium silicate, aluminium silicate, magnesium carbonate, kaolin, chalk, powdered quartz, mica, fildspar, etc.; nucleating agent, e.g., talc, calcium fluoride, sodium phenyl phosphinate, alumina, and finely divided polytetrafluoroethylene, etc.; plasticizers, up to about 20 per cent, based on the weight of the composition, e.g., dioctyl phthalate, dibenzyl phthalate, butyl benzyl phthalate, hydrocarbon oils, N-normal butyl benzene sulphonamide, ortho and para toluene ethyl sulphonamide, etc. The colourants (dyes and pigments) can be present in an amount of up to about 5.0 per cent by weight, based on the weight of the composition.

It is to be understood that in the specification and claims herein, unless otherwise indicated, when in connection with melt-blending, the amount of the polyamide, polyester or block copolymer is expressed in terms of per cent by weight it is meant per cent by weight based on the total amount of these materials which is employed in the melt-blending.

The following Examples further illustrate the invention.

Example 1

The base block copolymer used in this example was a styrene-ethylene/butylene-styrene (S-E/B-S) type block copolymer (herein referred to as reactant block copolymer A). Reactant block copolymer A had a molecular weight of about 50,000 and contained 30% polystyrene.

In a typical experiment, 45.36 kg of a polymer cement containing block copolymer A in cyclohexane (5% solids) was lithiated at 60° C using a diamine (tetramethylethylenediamine, TMEDA) promoted sec-butylLi reagent (1.1 mol base, 1.8 mol promoter). A rapid metallation reaction afforded a thixotropic, semisolid cement which immobilized the reactor's stirring mechanism (auger type) within 3-4 minutes. An aliquot of the lithiated-polymer cement was quenched with $D_2O$. The remainder was transferred through a 3.8 cm diameter line to a vessel containing an excess of $CO_2$ (1.36 kg) in tetrahydrofuran (THF). The carboxylated product was treated with acetic acid (85 g, 1.4 mol) and finished by steam coagulation affording over 1.81 kg of white, functionalized polymer crumb. Analyses of the carboxylated product found 0.84 %wt - $CO_2H$ and 0.29 %wt - $CO_2$ - for a total block copolymer bound carboxylate content of 1.13 %wt.

A deuterium (D) NMR analysis of the $D_2O$ treated aliquot found the D resided primarily at aromatic sites, at meta and para positions on the ring, (90% of total D), with the remainder of the tag or label being at either benzylic or allylic positions (10% of total D). The technique cannot discern between allylic and benzylic locations. Thus, the label resided principally, at least 90%, and most likely entirely in the polystyrene block of the block copolymer. We infer from this labelling experiment that essentially all of the lithiation reaction, at least 90%, occurred in the polystyrene block. Therefore, essentially all of the carboxylation must occur at these sites as well.

For this experiment, 50% of the reactant sec-butylLi was converted into polymer bound carboxylate as found in the product (lithiation efficiency). The product, as finished, contained 74 parts of acid (-$CO_2H$) to every 26 parts of salt (-$CO_2$-).

Examples 2-14

Examples 2-14 were conducted as outlined in Example 1. Some modifications were used as outlined in Table 1.

Reactant block copolymer B was similar to block copolymer A with the molecular weight being about 67,000. Reactant block copolymer C was similar to block copolymer A with the molecular weight being about 181,000 and a polystyrene content of 33%. Reactant block copolymer D was an S-E/P type of block copolymer with a total molecular weight of about 98,000 and a polystyrene content of 37%.

The lithiation of block copolymers A, B and C proceeded with a rapid rise in viscosity in all examples. In some examples, the lithiated product was allowed to digest for longer periods without stirring. The lithiation of block copolymer D proceeded with no observable increase in cement viscosity.

As found in Example 1, deuterium NMR analyses of $D_2O$ quenched aliquots of the various products found the label to be predominately in the polystyrene block of the block copolymer. These results are summarized in Table 2.

Each of the deuterated samples was analyzed by Gel Permeation Chromatography. The resulting molecular weight information did not differ significantly from that for the starting unmetallated block copolymer. This indicates that the metalation techniques did not induce any degradation, for example, chain

scission or crosslinking in these block copolymers.

Control experiments using the reaction technique of Example 1 and S-rubber-S block copolymers where the rubber is substantially unsaturated showed that these reactants were lithiated indiscriminately in both the styrene block (about 50%) and the rubber block (about 50%). These randomly functionalized products were not preferred.

TABLE I

PREPARATION OF KRATON G POLYMER CONTAINING LITHIUM CARBOXYLATE FUNCTIONALITY

| | Reaction Conditions | | | Product Analysis | | | | |
|---|---|---|---|---|---|---|---|---|
| | | | | Carboxylate Content (% wt) | | | | |
| Example | Polymer Type | s-Bu-Li (mol) | Reaction Time (min) | Theory | As Finished | Acidified | Lithiation Efficiency % | Acid/Salt As Finished Polymer |
| 2 | A | 1.13 | 60 | 2.25 | 1.12 | 1.39 | 62 | 81/19 |
| 3 | A | 1.13 | 60 | 2.25 | 0.21 | 0.22 | 10 | 95/5 |
| 4 | A | 1.13 | 60 | 2.25 | 0.60 | 1.04 | 46 | 58/42 |
| 5 | B | 1.13 | 1 | 2.25 | -- | 0.94 | 42 | 10/90 |
| 6 | B | 1.13 | 2 | 2.25 | 0.13 | 1.00 | 44 | 13/87 |
| 7 | B | 0.38 | 60 | 0.75 | 0.46 | 0.43 | 58 | 99/1 |
| 8 | B | 0.38 | 60 | 0.75 | 0.28 | 0.27 | 36 | 99/1 |
| 9 | C | 0.38 | 4 | 0.75 | 0.22 | 0.33 | 44 | 67/33 |
| 10 | C | 0.38 | 10 | 0.75 | 0.31 | 0.33 | 46 | 94/6 |
| 11 | D | 1.13 | 60 | 2.25 | 0.92 | 1.15 | 51 | 80/20 |
| 12 | D | 1.13 | 30 | 2.25 | 0.36 | 0.24 | 11 | 99/1 |
| 13 | D | 1.13 | 60 | 2.25 | 1.15 | 1.39 | 62 | 83/17 |
| 14 | B | 0.9 | 150 | -- | 0.44 | -- | -- | -- |

TABLE II

Location of Deuterated Site

| Example Number | Location of Deuterium Label (Carboxylate) Aromatic (%) | Benzylic, Allylic (%) |
|---|---|---|
| 2 | 91 | 9 |
| 3 | 93 | 7 |
| 4 | 92 | 8 |

Example 15

The modified block copolymer in Example 14 was converted to the carboxylic acid salt formed by the following procedure: 50 g of polymer was dissolved in 500 g of a 90:10 mixture of cyclohexane: THF. Next, 4.3 g of a 1 molar aqueous LiOH solution was added. The mixture was allowed to stand 24 hours. The block copolymer was then recovered by precipitation with methanol and dried at sub-atmospheric pressure. By IR analysis, the sample showed complete conversion of acid functionality to lithium salt functionality. The absorbance band of the salt occurs at 1560-1600 $cm^{-1}$, while that of the acid occurs at 1690 $cm^{-1}$.

Example 16

In this example, hydroxyl functionality was placed on the base block copolymer. The base block copolymer used was Reactant block copolymer B.

Base block copolymer (100 g) was dissolved in 100 ml of cyclohexane in a glass reactor under an argon purge. 1.02 meq TMEDA per g of polymer was then added. Impurities in the mixture were then removed by titration with sec-butyllithium. The reactor contents were heated to 50°C, and 0.51 meq of additional sec-butyllithium per g of block copolymer were added. 1000 ml of distilled THF was added and this solution was stirred at 25°C for 16 hours. This mixture was maintained at 40-45°C for 70 minutes. Next, ethylene oxide was bubbled into the vessel and the mixture was stirred for 10 minutes at 45°C. Finally, 1 meq of HCl (in methanol) per g of block copolymer was added to the reactor. The block copolymer was recovered by coagulation into 2-propanol and washed with methanol. A portion of the block copolymer was dried at sub-atmospheric pressure at 40°C.

In order to analyze this hydroxylated block copolymer, the OH functionality was converted to acid by reaction with maleic anhydride at 150-160°C in diisopropylbenzene. The reaction product was precipitated into methanol and washed with 70°C water to remove unreacted maleic anhydride. IR measurement showed carbonyl bands at 1730 $cm^{-1}$ characteristic of a maleic ester.

The block copolymer was then dried at sub-atmospheric pressure at 50°C. Titration for the half maleic acid ester using potassium methoxide in methanol together with a phenolphthalein indicator gave 0.18 meq acid per g block copolymer, showing that the original modified block copolymer contained 0.18 meq OH groups per g block copolymer.

The moulded bars in the following Examples were tested using the following test procedures in the dry-as moulded state:

Notched Izod toughness: at each end ASTM D-256-56

Examples 17-19 and Comparative Experiments A-D

The base block copolymer used was a styrene-ethylene/butylene-styrene block copolymer which contained 29wt% styrene and had a molecular weight of 66,000. 2270 g of this block copolymer were dissolved in 56.8 l of cyclohexane. This mixture was placed in 7.6 l stainless steel pressurized reaction vessel and pressurized to about 1.7 bar. 0.8 meq/g block copolymer of tetramethylethylene diamine was then added to the vessel. A small amount, 0.5 ml of 1,1 diphenylethylene (an indicator), was then added to the reactor. Sec-butyllithium was then added incrementally until a yellow colour was obtained, indicating the absence of impurities.

The reactor contents were then heated to 60 °C. Next, 0.4 meq/g block copolymer of additional sec-butyllithium was added to the reactor. After 2.5 hours reaction time, the contents of the vessel were transferred to another vessel which contained a stirring mechanism. This second vessel contained 0.9-1.4 kg of dry ice (solid $CO_2$, 37.9 l of tetrahydrofuran, and 18.9 l of diethyl ether. The solution was stirred for 30 minutes. Next, 85 g of acetic acid in a 2-propanol solution was added to the reactor. This solution was stirred for 16 hours. The modified block copolymer was then recovered by steam stripping.

Infrared analysis of the block copolymer showed the presence of both bound carboxylic acid at 1690 $cm^{-1}$ and bound lithium carboxylate salt at 1560-1600 $cm^{-1}$. By colorimetric titration with 0.01 N KOH in methanol using a phenolphthalein indicator, it was found that the level of bound acid was 0.3wt% COOH. After repeated washings of the block copolymer with alcoholic hydrochloric acid, infrared analysis showed that complete conversion of salt to acid took place. Titration of the washed block copolymer gave a bound acid level of 0.4wt% COOH.

The thermoplastic polyamide used in this example was a commercial nylon 6,6, Zytel 101, a trade name for a moulding grade obtained from Dupont. Prior to all processing steps, the nylon 6,6 and its blends were dried at 120 °C for 4 hours under sub-atmospheric pressure with a nitrogen purge.

Blends of nylon 6,6 with both unmodified and modified block copolymer were prepared in a 30 mm diameter corotating twin screw extruder. The blend components were premixed by tumbling in polyethylene bags, and then fed into the extruder. The extruder melt temperature profile varied from 270 °C in the feed zone to 285 °C at the die. A screw speed of 300 rotations per minute (rpm) was used. The extrudate was pelletized and injection moulded into test specimens. The formulations and physical properties are shown in Table III.

TABLE III

| Example | | | | | 17 | 18 | 19 |
|---|---|---|---|---|---|---|---|
| Comparative Experiment | A | B | C | D | | | |
| Nylon 6,6 | 100 | 90 | 80 | 70 | 90 | 80 | 70 |
| Unmodified Block Copolymer | -- | 10 | 20 | 30 | -- | -- | -- |
| Modified Block Copolymer | -- | -- | -- | -- | 10 | 20 | 30 |
| 3.2 mm Dry as Moulded Room Temperature Notched Izod (J/m) | 43 | 48 | 53 | 64 | 53 | 107 | 288 |

The examples 17-19 show that the compositions according to this invention exhibit an unexpected improvement in impact strength over the thermoplastic polyamide or blends of the thermoplastic polyamide with unmodified block copolymer.

Examples 20-22 and Comparative Experiments E-H

The thermoplastic polyester used in this example was a commercial PBT, Valox 310, a moulding grade obtained from General Electric. Prior to all processing steps, PBT and its blends were dried at 120 °C for 4 hours under sub-atmospheric pressure with a nitrogen purge. The modified block copolymer was identical with that used in the Examples 17-19.

Blends of PBT with both unmodified and modified block copolymer were prepared in a 30 mm diameter corotating twin screw extruder. The blend components were premixed by tumbling in polyethylene bags, and then fed into the extruder. The extruder melt temperature profile varied from 230 °C in the feed zone to 240 °C at the die. A screw rpm of 300 was used. The extrudate was pelletized and injection moulded into test specimens. The formulations and physical properties are shown in Table IV.

TABLE IV

| Example | | | | | 20 | 21 | 22 |
|---|---|---|---|---|---|---|---|
| Comparative Experiment | E | F | G | H | | | |
| PBT | 100 | 90 | 80 | 70 | 90 | 80 | 70 |
| Unmodified Block Copolymer | -- | 10 | 20 | 30 | -- | -- | -- |
| Modified Block Copolymer | -- | -- | -- | -- | 10 | 20 | 30 |
| 3.2 mm Room Temperature Notched Izod (J/m) | 37 | 48 | 75 | 91 | 107 | 1062 | 1148 |

The examples 20-22 show that the compositions according to this invention exhibit an unexpected improvement in impact strength over the thermoplastic polyester or blends of the thermoplastic polyester with unmodified block copolymer.

**Claims**

**Claims for the following Contracting States : BE, CH, DE, FR, GB, IT, LI, NL, SE**

1. A functionalized selectively hydrogenated block copolymer of the formula $B_n(AB)_oA_p$ where n is 0 or an integer of at least one, o is an integer of at least one and p is 0 or an integer of at least one, A is predominantly a polymerized monoalkenyl-aromatic hydrocarbon block and B prior to hydrogenation is predominantly a polymerized conjugated diene hydrocarbon block, to which copolymer has been grafted at least one electrophilic graftable molecule or electrophile characterized in that substantially all of said graftable molecules are grafted to the monoalkenyl-arene block in the block copolymer.

2. A functionalized block copolymer as claimed in claim 1 in which each block A has an average molecular weight in the range of from 1,000 to 115,000.

3. A functionalized block copolymer as claimed in claim 1 or 2 in which said polymerized conjugated diene hydrocarbon block has an average molecular weight in the range of from 20,000 to 450,000.

4. A functionalized block copolymer as claimed in claim 1 or 2 in which the blocks A constitute in the range of from 1 to 95 weight per cent of the copolymer.

5. A functionalized block copolymer as claimed in any one of the preceding claims in which the unsaturation of the block B is less than 20% of the original unsaturation.

6. A functionalized block copolymer as claimed in any one of the preceding claims in which the unsaturation of the A blocks is above 50% of the original unsaturation.

7. A functionalized block copolymer as claimed in any one of the preceding claims in which the grafted molecule contains one or more functional groups.

8. A functionalized block copolymer as claimed in any one of the preceding claims in which prior to hydrogenation, the polymeric blocks A are polymer blocks of a monoalkenyl-aromatic hydrocarbon.

9. A functionalized block copolymer as claimed in claim 8 in which the monoalkenyl-aromatic hydrocarbon is styrene.

10. A functionalized block copolymer as claimed in any one of the preceding claims in which the

conjugated diene is 1,3-butadiene.

**11.** A functionalized block copolymer as claimed in any one of the preceding claims in which the block copolymer is a styrene-ethylene/butylene-styrene block copolymer.

**12.** A functionalized block copolymer as claimed in any one of the preceding claims in which the blocks A comprise in the range of from 1 to 40 per cent by weight of the block copolymer.

**13.** A functionalized block copolymer as claimed in any one of the preceding claims in which the unsaturation of block B has been reduced to less than 10% of its original value.

**14.** A functionalized block copolymer as claimed in claim 13 in which the unsaturation of block B has been reduced to less than 5% of its original value.

**15.** A functionalized block copolymer as claimed in any one of the preceding claims in which the average unsaturation of the hydrogenated block copolymer has been reduced to less than 20% of its original value.

**16.** A functionalized block copolymer as claimed in any one of the preceding claims in which an average of less than 10% of the monoalkenyl-aromatic hydrogen units have been hydrogenated.

**17.** A functionalized block copolymer as claimed in any one of the preceding claims in which block A has an average molecular weight in the range of from 500 to 60,000.

**18.** A functionalized block copolymer as claimed in any one of the preceding claims in which block B has an average molecular weight in the range of from 35,000 to 150,000.

**19.** A functionalized block copolymer as claimed in any one of the preceding claims in which in the range of from 35%-50% of the butadiene units have 1,2-micro structure content prior to hydrogenation.

**20.** A functionalized block copolymer as claimed in any one of claims 1 to 15 in which an average of more than 25% of the monoalkenyl-aromatic hydrocarbon units have been hydrogenated.

**21.** A functionalized block copolymer as claimed in any one of the preceding claims in which the electrophile is carbon dioxide.

**22.** A functionalized block copolymer as claimed in any one of claims 1 to 20 in which the electrophile is ethylene oxide.

**23.** A functionalized block copolymer as claimed in any one of claims 1 to 20 in which the electrophiles are selected from the group consisting of aldehydes, ketones and carboxylic acids and salts and esters thereof.

**24.** A functionalized block copolymer as claimed in any one of claims 1 to 20 in which the electrophiles are epoxides.

**25.** A functionalized block copolymer as claimed in any one of claims 1 to 20 in which the electrophile is sulphur.

**26.** A functionalized block copolymer as claimed in any one of claims 1 to 20 in which the electrophile is a boron alkoxide.

**27.** A functionalized block copolymer as claimed in any one of claims 1 to 20 in which the electrophile is an isocyanate.

**28.** A functionalized block copolymer as claimed in any one of claims 1 to 20 in which the electrophile is a molecule containing silicon.

29. A functionalized block copolymer as claimed in any one of claims 1 to 20 in which the electrophile is a sulphonate.

30. A functionalized block copolymer as claimed in any one of claims 7 to 29 in which the functional groups are carboxylic acids or salts or esters thereof.

31. A functionalized block copolymer as claimed in any one of claims 7 to 29 in which the functional groups are ketones.

32. A functionalized block copolymer as claimed in any one of claims 7 to 29 in which the functional groups are alcohols and alkoxides.

33. A functionalized block copolymer as claimed in any one of claims 7 to 29 in which the functional groups are amines.

34. A functionalized block copolymer as claimed in any one of claims 7 to 29 in which the functional groups are functional groups containing a silicon atom.

35. A functionalized block copolymer as claimed in any one of claims 7 to 29 in which the functional groups are thiols.

36. A functionalized block copolymer as claimed in any one of claims 7 to 29 in which the functional groups are borates.

37. A functionalized block copolymer as claimed in any one of claims 7 to 29 in which the functional groups are amides.

38. A functionalized block copolymer as claimed in any one of the preceding claims in which the grafted molecule or a derivative thereof is present in an amount in the range of from 0.02 to 20 per cent by weight percent of the grafted portion.

39. A functionalized block copolymer as claimed in claim 38 in which the grafted molecule or its derivative is in an amount in the range of from 0.1 to 10 per cent by weight.

40. A functionalized block copolymer as claimed in claim 39 in which the grafted molecule or its derivative is present in an amount in the range of from 0.2 to 5 per cent by weight.

41. Impact resistant polymeric compositions comprising
a) in the range of from 50 to 97 per cent of a polyamide having a number average molecular weight of at least 5,000, or of a thermoplastic polyester, and
b) in the range of from 3 to 50 per cent by weight of a functionalized selectively hydrogenated block copolymer as claimed in any one of the preceding claims.

42. An impact resistant polymeric composition as claimed in claim 41 in which the polyamide or polyester is present in an amount in the range of from 70 to 95 per cent by weight.

43. An impact resistant polymeric composition as claimed in claim 42 in which the polyamide or polyester is present in an amount in the range of from 75 to 90 per cent by weight.

44. An impact resistant polymeric composition as claimed in any one of claims 41 to 43 in which the polyamide is nylon 6,6.

45. An impact resistant polymeric composition as claimed in any one of claims 41 to 43 in which the polyamide resin is selected from the group consisting of polyhexamethylene adipamide, polyhexamethylene sebacamide, polycaprolactam, polyhexamethylene isophthalamide, polyhexamethylene tere-co-isophthalamide and mixtures and copolymers thereof.

46. An impact resistant polymeric composition as claimed in any one of claims 41 to 43 in which the

polyester is polybutylene terephthalate.

**47.** An impact resistant polymeric composition as claimed in any one of claims 41 to 43 in which the polyester is polyethylene terephthalate.

**48.** A process for producing a functionalized selectively hydrogenated block copolymer as claimed in any one of claims 1 to 40, which process comprises contacting hydrogenated block copolymers of conjugated dienes and monoalkenyl-aromatic compounds with an alkyllithium compound, and, if required, a polar metallation promoter selected from the group consisting of tertiary amines and low molecular weight hydrocarbon ethers, to form a backbone block copolymer having active lithium atoms along the polymer chain, and thereafter contacting said backbone block copolymer and at least one electrophilic graftable molecule or electrophile to form backbone block copolymers with grafted molecules attached wherein substantially all of said graftable molecules which have been grafted are grafted to the the monoalkenyl-arene block in the block copolymer.

**49.** A process as claimed in claim 48 in which the polar compound is present in an amount in the range of from 0.1 to 10.0 equivalents per equivalent of lithium-alkyl.

**50.** A process as claimed in claim 49 in which the polar compound is present in an amount in the range of from 1 to 3 equivalents per equivalent of lithium-alkyl.

**51.** A process as claimed in any one of claims 48 to 50 in which the polar compound is N,N,N',N'-tetramethylethylenediamine.

**52.** A process as claimed in any one of claims 48 to 51 in which a molar ratio of said alkyl-lithium compound to vinylarene units in the range of from 0.001 to 3 is used.

**53.** A process as claimed in claim 52 in which said molar ratio is in the range of from 0.01 to 1.0.

**54.** A process as claimed in any one of claims 48 to 53 in which said alkyllithium compound is sec-butyllithium.

**55.** A process as claimed in any one of claims 48 to 54 in which said metallating step is performed at a temperature in the range of from 25 °C to 80 °C.

**56.** A process for producing functionalized selectively hydrogenated block copolymers as claimed in any one of claims 1 to 40 which process comprises contacting hydrogenated block copolymers of conjugated dienes and monoalkenyl-aromatic compounds with tert-butyllithium to form a backbone block copolymer having active lithium atoms along the polymer chain, and thereafter contacting at least one electrophilic graftable molecule which upon reaction with the active lithium atoms will produce functional groups selected from the group consisting of carboxyls, alcohols and ethers wherein substantially all of said molecules are grafted to the monoalkenyl-arene block in the block copolymer.

**Claims for the following Contracting State : AT**

**1.** A process for producing a functionalised selectively hydrogenated block copolymer of the formula $B_n$-$(AB)_oA_p$ where n is 0 or an integer of at least one, o is an integer of at least one and p is 0 or an integer of at least one, A is predominantly a polymerized monoalkenyl-aromatic hydrocarbon block and B prior to hydrogenation is predominantly a polymerized conjugated diene hydrocarbon block, which process comprises contacting hydrogenated block copolymers of conjugated dienes and monoalkenyl aromatic compounds with an alkyllithium compound, and, if required, a polar metallation promoter selected from the group consisting of tertiary amines and low molecular weight hydrocarbon ethers, to form a backbone block copolymer having active lithium atoms along the polymer chain, and thereafter contracting said backbone block copolymer and at least one electrophilic graftable molecule or electrophile to form backbone block copolymers with grafted molecules attached wherein substantially all of said graftable molecules which have been grafted are grafted to the monoalkenylarene block in the block copolymer.

2. A process as claimed in claim 1 in which the polar compound is present in an amount in the range of from 0.1 to 10.0 equivalents per equivalent of lithium-alkyl.

3. A process as claimed in claim 2 in which the polar compound is present in an amount in the range of from 1 to 3 equivalents per equivalent of lithium-alkyl.

4. A process as claimed in any one of claims 1 to 3 in which the polar compound is N,N,N',N'-tetramethylethylenediamine.

5. A process as claimed in any one of claims 1 to 4 in which a molar ratio of said alkyl-lithium compound to vinylarene units in the range of from 0.001 to 3 is used.

6. A process as claimed in claim 5 in which said molar ratio is in the range of from 0.01 to 1.0.

7. A process as claimed in any one of claims 1 to 6 in which said alkyllithium compound is sec-butyllithium.

8. A process as claimed in any one of claims 1 to 7 in which said metallating step is performed at a temperature in the range of from 25 °C to 80 °C.

9. A process as claimed in any one of claims 1 to 8 which process comprises contacting hydrogenated block copolymers of conjugated dienes and monoalkenyl-aromatic compounds with tert-butyllithium to form a backbone block copolymer having active lithium atoms along the polymer chain, and thereafter contacting at least one electrophilic graftable molecule which upon reaction with the active lithium atoms will produce functional groups selected from the group consisting of carboxyls, alcohols and ethers wherein substantially all of said molecules are grafted to the monoalkenyl-arene block in the block copolymer.

10. A process as claimed in claims 1-9 in which a functionalised block copolymer is prepared in which each block A has an average molecular weight in the range of from 1,000 to 115,000.

11. A process as claimed in claims 1-9, in which said polymerised conjugated diene hydrocarbon block has an average molecular weight in the range of from 20,000 to 450,000.

12. A process as claimed in claims 1-9, in which the blocks A constitute in the range of from 1 to 95 weight percent of the copolymer.

13. A process as claimed in claims 1-9 in which a functionalised block copolymer is prepared in which the unsaturation of the block B is less than 20% of the original unsaturation.

14. A process as claimed in claims 1-9 in which a functionalized block copolymer is prepared in which the unsaturation of the A blocks is above 50% of the original unsaturation.

15. A process as claimed in claims 1-9 in which a functionalized block copolymer is prepared in which the grafted molecule contains one or more functional groups.

16. Process according to claims 1-9 in which a functionalized block copolymer is prepared in which the monoalkenyl-aromatic hydrocarbon is styrene.

17. Process according to claims 1-9 in which a functionalised block copolymer is prepared in which the conjugated diene is 1,3-butadiene.

18. Process according to claims 1-9 in which a functionalized block copolymer is prepared in which the block copolymer is a styrene-ethylene/butylene-styrene block copolymer.

19. Process according to claims 1-9 in which a functionalized block copolymer is prepared in which the blocks A comprise in the range of from 1 to 40 per cent by weight of the block copolymer.

**20.** Process according to claims 1-9 in which a functionalised block copolymer is prepared in which the unsaturation of block B has been reduced to less than 10% of its original value.

**21.** Process according to claim 20 in which a functionalised block copolymer is prepared in which the unsaturation of block B has been reduced to less than 5% of its original value.

**22.** Process as claimed in any one of the preceding claims in which a functionalized block copolymer is prepared in which the average unsaturation of the hydrogenated block copolymer has been reduced to less than 20% of its original value.

**23.** Process as claimed in any one of the preceding claims in which a functionalized block copolymer is prepared in which an average of less than 10% of the monoalkenyl-aromatic hydrocarbon units have been hydrogenated.

**24.** Process as claimed in any one of the preceding claims in which a functionalized block copolymer is prepared in which block A has an average molecular weight in the range of from 500 to 60,000.

**25.** Process as claimed in any one of the preceding claims in which a functionalized block copolymer is prepared in which block B has an average molecular weight in the range of from 35,000 to 150,000.

**26.** Process as claimed in any one of the preceding claims in which a functionalized block copolymer is prepared in which in the range of from 35%- 50% of the butadiene units have 1,2-micro structure content prior to hydrogenation.

**27.** Process as claimed in any one of the preceding claims in which the electrophile is carbon dioxide.

**28.** Process as claimed in any one of the preceding claims in which the electrophile is ethylene oxide.

**29.** Process as claimed in any one of the preceding claims in which the electrophiles are selected from the group consisting of aldehydes, ketones and carboxylic acids and salts and esters thereof.

**30.** Process as claimed in any one of the preceding claims in which the electrophiles are epoxides.

**31.** Process as claimed in any one of the preceding claims in which the electrophile is sulphur.

**32.** Process as claimed in any one of the preceding claims in which the electrophile is a boron alkoxide.

**33.** Process as claimed in any one of the preceding claims in which the electrophile is an isocyanate.

**34.** Process as claimed in any one of the preceding claims in which the electrophile is a molecule containing silicon.

**35.** Process as claimed in any one of the preceding claims in which the electrophile is a sulphonate.

**36.** Process for the preparation of a functionalized block copolymer in which the functional groups are carboxylic acids or salts or esters thereof.

**37.** Process for the preparation of a functionalized block copolymer in which the functional groups are ketones.

**38.** Process for the preparation of a functionalized block copolymer in which the functional groups are alcohols and alkoxides.

**39.** Process for the preparation of a functionalized block copolymer in which the functional groups are amines.

**40.** Process for the preparation of a functionalized block copolymer in which the functional groups are functional groups containing a silicon atom.

41. Process for the preparation of a functionalized block copolymer in which the functional groups are thiols.

42. Process for the preparation of a functionalized block copolymer in which the functional groups are borates.

43. Process for the preparation of a functionalized block copolymer in which the functional groups are amides.

44. Process for the preparation of a functionalized block copolymer as claimed in any one of the preceding claims in which the grafted molecule or a derivative thereof is present in an amount in the range of from 0.02 to 20 per cent by weight per cent of the grafted portion.

45. Process for the preparation of a functionalized block copolymer as claimed in claim 44 in which the grafted molecule or its derivative is in an amount in the range of from 0.1 to 10 per cent by weight.

46. Process for the preparation of a functionalized block copolymer as claimed in claim 45 in which the grafted molecule or its derivative is present in an amount in the range of from 0.2 to 5 per cent by weight.

47. Process for the preparation of impact resistant polymeric compositions comprising
   a) in the range of from 50 to 97 per cent of a polyamide having a number average molecular weight of at least 5,000, or of a thermoplastic polyester, and
   b) in the range of from 3 to 50 per cent by weight of a functionalized selectively hydrogenated block copolymer according to any one of the preceding claims.

48. Process for the preparation of an impact resistant polymeric composition as claimed in claim 47 in which the polyamide resin is selected from the group consisting of polyhexamethylene adipamide, polyhexamethylene sebacamide, polycaprolactam, polyhexamethylene isophthalamide, polyhexamethylene tere-co-isophthalamide and mixtures and copolymers thereof.

49. Process for the preparation of an impact resistant polymeric composition as claimed in claims 47 and 48 in which the polyester is polybutylene terephthalate.

50. Process for the preparation of an impact resistant polymeric composition as claimed in any one of claims 47 to 49 in which the polyester is polyethylene terephthalate.

**Revendications**
**Revendications pour les Etats contractants suivants : BE, CH, DE, FR, GB, IT, LI, NL, SE**

1. Copolymère séquencé fonctionnalisé sélectivement hydrogéné, de formule $B_n(AB)_oA_p$ où n vaut 0 ou un nombre entier valant au moins 1, o est un nombre entier valant au moins 1 et p vaut 0 ou un nombre entier valant au moins 1, A est de façon prédominante une séquence hydrocarbonée monoalcénylaromatique polymérisée et B avant l'hydrogénation est de façon prédominante une séquence hydrocarbonée diène conjugué polymérisée, auquel copolymère a été greffée au moins une molécule greffable électrophile ou une espèce électrophile, caractérisé en ce qu'essentiellement toutes les molécules greffables sont greffées à la séquence monoalcénylarène dans le copolymère séquencé.

2. Copolymère séquencé fonctionnalisé selon la revendication 1, dans lequel chaque séquence A a un poids moléculaire moyen situé dans un intervalle allant de 1000 à 115 000.

3. Copolymère séquencé fonctionnalisé selon la revendication 1 ou 2, dans lequel ladite séquence hydrocarbonée diène conjuguée polymérisée a un poids moléculaire moyen situé dans un intervalle allant de 20 000 à 450 000.

4. Copolymère séquencé fonctionnalisé selon la revendication 1 ou 2, dans lequel les séquences A constituent de 1 à 95% en poids du copolymère.

5. Copolymère séquencé fonctionnalisé selon l'une quelconque des revendications précédentes, dans lequel l'insaturation de la séquence B est inférieure à 20% de l'insaturation de l'origine.

6. Copolymère séquencé fonctionnalisé selon l'une quelconque des revendications précédentes, dans lequel l'insaturation des séquences A est supérieure à 50% de l'insaturation d'origine.

7. Copolymère séquencé fonctionnalisé selon l'une quelconque des revendications précédentes, dans lequel la molécule greffée contient un ou plusieurs groupes fonctionnels.

8. Copolymère séquencé fonctionnalisé selon l'une quelconque des revendications précédentes, dans lequel avant l'hydrogénation, les séquences polymériques A sont des séquences de polymère d'un hydrocarbure monoalcényl-aromatique.

9. Copolymère séquencé fonctionnalisé selon la revendication 8, dans lequel l'hydrocarbure monoalcényl-aromatique est le styrène.

10. Copolymère séquencé fonctionnalisé selon l'une quelconque des revendications précédentes dans lequel le diène conjugué est le 1,3-butadiène.

11. Copolymère séquencé fonctionnalisé selon l'une quelconque des revendications précédentes, dans lequel le copolymère séquencé est un copolymère séquencé styrène-éthylène/butylène-styrène.

12. Copolymère séquencé fonctionnalisé selon l'une quelconque des revendications précédentes, dans lequel les séquences A constituent de 1 à 40% en poids du copolymère séquencé.

13. Copolymère séquencé fonctionnalisé selon l'une quelconque des revendications précédentes, dans lequel l'insaturation de la séquence B a été réduite à moins de 10% de sa valeur d'origine.

14. Copolymère séquencé fonctionnalisé selon la revendication 13, dans lequel l'insaturation de la séquence B a été réduite à moins de 5% de sa valeur d'origine.

15. Copolymère séquencé fonctionnalisé selon l'une quelconque des revendications précédentes, dans lequel l'insaturation moyenne du copolymère séquencé hydrogéné a été réduite à moins de 20% de sa valeur d'origine.

16. Copolymère séquencé fonctionnalisé selon l'une quelconque des revendications précédentes, dans lequel une moyenne de moins de 10% des unités hydrocarbonées monoalcényl-aromatigues ont été hydrogénées.

17. Copolymère séquencé fonctionnalisé selon l'une quelconque des revendications précédentes, dans lequel la séquence A un poids moléculaire moyen situé dans un intervalle allant de 500 à 60 000.

18. Copolymère séquencé fonctionnalisé selon l'une quelconque des revendications précédentes, dans lequel la séquence B a un poids moléculaire moyen situé dans un intervalle allant de 35 000 à 150 000.

19. Copolymère séquencé fonctionnalisé selon l'une quelconque des revendications précédentes, dans lequel de 35% à 50% des unités butadiène ont une teneur en micro-structure 1,2 avant hydrogénation.

20. Copolymère séquencé fonctionnalisé selon l'une quelconque des revendications 1-15, dans lequel une moyenne de plus de 25% des unités hydrocarbonées monoalcényl-aromatiques ont été hydrogénées.

21. Copolymère séquencé fonctionnalisé selon l'une quelconque des revendications précédentes, dans lequel l'espèce électrophile est le dioxyde de carbone.

22. Copolymère séquencé fonctionnalisé selon l'une quelconque des revendications 1-20 dans lequel l'espèce électrophile est l'oxyde d'éthylène.

23. Copolymère séquencé fonctionnalisé selon l'une quelconque des revendications 1-20 dans lequel les espèces électrophiles sont choisies dans le groupe constitué par les aldéhydes, les cétones et les acides carboxyliques et leurs sels et esters.

24. Copolymère séquencé fonctionnalisé selon l'une quelconque des revendication 1-20 dans lequel les espèces électrophiles sont les époxydes.

25. Copolymère séquencé fonctionnalisé selon l'une quelconque des revendications 1-20, dans lequel l'espèce électrophile est le soufre.

26. Copolymère séquencé fonctionnalisé selon l'une quelconque des revendications 1-20, dans lequel l'espèce électrophile est un alcoxyde de bore.

27. Copolymère séquencé fonctionnalisé selon l'une quelconque des revendications 1-20, dans lequel l'espèce électrophile est un isocyanate.

28. Copolymère séquencé fonctionnalisé selon l'une quelconque des revendications 1-20, dans lequel l'électrophile est une molécule contenant du silicium.

29. Copolymère séquencé fonctionnalisé selon l'une quelconque des revendications 1-20 dans lequel l'espèce électrophile est un sulfonate.

30. Copolymère séquencé fonctionnalisé selon l'une quelconque des revendications 7-29 dans lequel les groupes fonctionnels sont des acides carboxyliques ou leurs sels ou esters.

31. Copolymère séquencé fonctionnalisé selon l'une quelconque des revendications 7-29, dans lequel les groupes fonctionnels sont des cétones.

32. Copolymère séquencé fonctionnalisé selon l'une quelconque des revendications 7-29, dans lequel les groupes fonctionnels sont des alcools et des alcoxydes.

33. Copolymère séquencé fonctionnalisé selon l'une quelconque des revendications 7-29, dans lequel les groupes fonctionnels sont des amines.

34. Copolymère séquencé fonctionnalisé selon l'une quelconque des revendications 7-29, dans lequel les groupes fonctionnels sont des groupes fonctionnels contenant un atome de silicium.

35. Copolymère séquencé fonctionnalisé selon l'une quelconque des revendications 7-29 dans lequel les groupes fonctionnels sont des thiols.

36. Copolymère séquencé fonctionnalisé selon l'une quelconque des revendications 7-29, dans lequel les groupes fonctionnels sont des borates.

37. Copolymère séquencé fonctionnalisé selon l'une quelconque des revendications 7-29, dans lequel les groupes fonctionnels sont des amides.

38. Copolymère séquencé fonctionnalisé selon l'une quelconque des revendications précédentes, dans lequel la molécule greffée ou un de ses dérivés est présent en une quantité allant de 0,02 à 20% en poids de la partie greffée.

39. Copolymère séquencé fonctionnalisé selon la revendication 28, dans lequel la molécule greffée ou son dérivé est en une quantité allant de 0,1 à 10% en poids.

40. Copolymère séquencé fonctionnalisé selon la revendication 39, dans lequel la molécule greffée ou son dérivé est présent(e) en une quantité allant de 0,2 à 5% en poids.

41. Compositions polymériques résistantes au choc comprenant :
a) de 50 à 97% d'un polyamide ayant un poids moléculaire moyen en nombre d'au moins 5000, ou

d'un polymère thermoplastique,
et
b) de 3 à 50% en poids d'un copolymère séquencé sélectivement hydrogéné fonctionnalisé selon l'une quelconque des revendications précédentes.

**42.** Composition polymérique résistante au choc selon la revendication 41, dans laquelle le polyamide est présent en une quantité de 70 à 95% en poids.

**43.** Composition polymérique résistante au choc selon la revendication 42, dans laquelle le polyamide ou le polyester est présent en une quantité de 75 à 90% en poids.

**44.** Composition polymérique résistante au choc selon l'une quelconque des revendications 41-43, dans laquelle le polyamide est le nylon 6,6.

**45.** Composition polymérique résistante au choc selon l'une quelconque des revendications 41-43, dans laquelle la résine polyamide est choisie dans le groupe constitué par le polyhexaméthylène-adipamide, le polyhexaméthylène-sébacamide, le polycaprolactame, le polyhexaméthylène-isophtalamide, le polyhexaméthylène téré-co-isophtalamide et leurs mélanges et copolymères.

**46.** Composition polymérique résistante au choc selon l'une quelconque des revendications 41-43, dans laquelle le polyester est le térephtalate de polybutylène.

**47.** Composition polymérique résistante au choc selon l'une quelconque des revendications 41-43, dans laquelle le polyester est le térephtalate de polyéthylène.

**48.** Procédé de production d'un copolymère séquencé sélectivement hydrogéné fonctionnalisé selon l'une quelconque des revendications 1-40, procédé comprenant la mise en contact des copolymères séquencés hydrogénés de diènes conjugués et de composés monoalcényl-aromatiques avec un composé d'alcoyl-lithium et, si nécessaire, un promoteur de métallation polaire choisi dans le groupe constitué par les amines tertiaires, et les éthers hydrocarbonés de faible poids moléculaire, pour former un copolymère séquencé d'ossature ayant des atomes de lithium actifs le long de la chaîne polymérique, la mise en contact du copolymère séquencé d'ossature et d'au moins une molécule greffable électrophile ou espèce électrophile pour former des copolymères séquencés d'ossature ayant des molécules greffées attachées où essentiellement la totalité desdites molécules greffables qui ont été greffées sont greffées sur la séquence monoalcénylarène dans le copolymère séquencé.

**49.** Procédé selon la revendication 48, dans lequel le composé polaire est présent en une quantité allant de 0,1 à 10,0 équivalents par équivalent de lithium-alcoyle.

**50.** Procédé selon la revendication 49, dans lequel le composé polaire est présent en une quantité allant de 1 à 3 équivalents par équivalent de lithiumalcoyle.

**51.** Procédé selon l'une quelconque des revendications 48 à 50 dans lequel le composé polaire est la N,N,N',N'-tétraméthyléthylènediamine.

**52.** Procédé selon l'une quelconque des revendications 48-51, dans lequel on utilise un rapport molaire dudit composé alcoyl-lithium aux unités vinylarène allant de 0,001 à 3.

**53.** Procédé selon la revendication 52, dans lequel ledit rapport molaire est dans un intervalle allant de 0,01 à 1,0.

**54.** Procédé selon l'une quelconque des revendications 48-53, dans lequel ledit composé alcoyllithium est le sec.-butyllithium.

**55.** Procédé selon l'une quelconque des revendications 48-54, dans lequel ladite étape de métallation est conduite à une température allant de 25° C à 80° C.

**56.** Procédé de production de copolymères séquencés sélectivement hydrogénés fonctionnalisés selon

l'une quelconque des revendications 1-40, lequel procédé comprend la mise en contact de copolymères séquencés hydrogénés de diènes conjugués et de composés monoalcényl-aromatiques avec du tert.-butyllithium pour former un copolymère séquencé d'ossature ayant des atomes de lithium actifs le long de la chaîne polymérique, puis la mise en contact d'au moins une molécule greffable électrophile, qui, après réaction avec les atomes de lithium actifs, produisent des groupes focntionnels choisis dans le groupe constitué par les carboxyles, alcools et éthers où la presque totalité desdites molécules est greffée sur la séquence mono-alcényl-arène dans le copolymère séquencé.

**Revendications pour l'Etat contractant suivant : AT**

1. Procédé pour produire un copolymère séquencé fonctionnalisé sélectivement hydrogéné, de formule $B_n(AB)_oA_p$ où n vaut 0 ou un nombre entier valant au moins 1, o est un nombre entier valant au mois 1 et p vaut 0 ou un nombre entier valant au moins 1, A est de façon prédominante une séquence hydrocarbonée monoalcényl-aromatique polymérisée et B avant l'hydrogénation est de façon prédominante une séquence hydrocarbonée diène conjuguée polymérisée, lequel procédé comprend la mise en contact des copolymères séquencés hydrogénés de diènes conjugués et de composés monoaloényl-aromatiques avec un composé d'alcoyllithium et, si nécessaire, un promoteur de métalliation polaire choisi dans le groupe constitué par les amines tertiaires, et les éthers hydrocarbonés de faible poids moléculaire, pour former un copolymère séquencé d'ossature ayant des atomes de lithium actifs le long de la chaine polymérique, et après cela la mise en contact dudit copolymère séquencé d'ossature avec au moins une molécule greffable électrophile ou espèce èlectrophile pour former des copolymères séquencés d'ossature ayant des molécules greffées attachées où pratiquement toutes lesdites molécules greffables qui ont été greffées sont greffées sur la séquence monoalcénylarène dans le copolymère séquencé.

2. Procédé selon la revendication 1, dans lequel le composé polaire est présent en une quantité allant de 0,1 à 10,0 équivalents par équivalent de lithiumalcoyle.

3. Procédé selon la revendication 2, dans lequel le composé polaire est présent en une quantité allant de 1 à 3 équivalents par équivalent de lithiumalcoyle.

4. Procédé selon l'une quelconque des revendications 1 à 3, dans lequel le composé polaire est la N,N,N',N'-tétraméthyléthylènediamine.

5. Procédé selon l'une quelconque des revendications 1-4, dans lequel on utilise un rapport molaire dudit composé alcoyllithium aux unités vinylarène allant de 0,001 à 3.

6. Procédé selon la revendication 5, dans lequel ledit rapport molaire est dans un intervalle allant de 0,01 à 1,0.

7. Procédé selon l'une quelconque des revendications 1 à 6, dans lequel ledit composé alcoyllithium est le sec.-butyllithium.

8. Procédé selon l'une quelconque des revendications 1 à 7, dans lequel ladite étape de métalliation est conduite à une température allant de 25°C à 80°C.

9. Procédé selon l'une quelconque des revendications 1 à 8 lequel procédé comprend la mise en contact de copolymères séquencés hydrogénés de diènes conjugués et de composés monoalcényl-aromatiques avec du tert.-butyllithium pour former un copolymère séquencé d'ossature ayant des atomes de lithium actifs le long de la chaîne polymérique, puis la mise en contact d'au moins une molécule greffable électrophile, qui, après réaction avec les atomes de lithium actifs, produisent des groupes fonctionnels choisis dans le groupe constitué par les carboxyles, alcools et éthers où la presque totalité desdites molécules est greffée sur la séquence monoalcénylarène dans le copolymère séquencé.

10. Procédé selon les revendications 1-9, dans lequel un copolymère séquencé fonctionnalisé est préparé, dans lequel chaque séquence A a un poids moléculaire moyen situé dans un intervalle allant de 1.000 à 115.000.

11. Procédé selon les revendications 1-9, dans lequel un copolymère séquencé fonctionnalisé est préparé, dans lequel ladite séquence hydrocarbonée diène conjuguée polymérisée a un poids moléculaire moyen situé dans un intervalle allant de 20.000 à 450.000.

12. Procédé selon les revendications 1-9, dans lequel un copolymère séquencé fonctionnalisé est préparé, dans lequel les séquences A constituent de 1 à 95 % en poids du copolymère.

13. Procédé selon les revendications 1-9, dans lequel un copolymère séquencé fonctionnalisé est préparé, dans lequel l'insaturation de la séquence B est inférieure à 20 % de l'insaturation de l'origine.

14. Procédé selon les revendications 1-9, dans lequel un copolymère séquencé fonctionnalisé est préparé, dans lequel l'insaturation des séquences A est supérieure à 50 % de l'insaturation d'origine.

15. Procédé selon les revendications 1-9, dans lequel un copolymère séquencé fonctionnalisé est préparé, dans lequel la molécule greffée contient un ou plusieurs groupes fonctionnels.

16. Procédé selon les revendications 1-9, dans lequel un copolymère séquencé fonctionnalisé est préparé, dans lequel l'hydrocarbure monoalcényl-aromatique est le styrène.

17. Procédé selon les revendications 1-9, dans lequel un copolymère séquencé fonctionnalisé est préparé, dans lequel le diène conjugué est le 1,3-butadiène.

18. Procédé selon les revendications 1-9, dans lequel un copolymère séquencé fonctionnalisé est préparé, dans lequel le copolymère séquencé est un copolymère séquencé styrène-éthylène/butylène-styrène.

19. Procédé selon les revendications 1-9, dans lequel on copolymère séquencé fonctionnalisé est préparé, dans lequel les séquences A constituent de 1 à 40 % en poids du copolymère séquencé.

20. Procédé selon les revendications 1-9, dans lequel un copolymère séquencé fonctionnalisé est préparé, dans lequel l'insaturation de la séquence B a été réduite à moins de 10 % de sa valeur d'origine.

21. Procédé selon la revendication 20, dans lequel un copolymère séquencé fonctionnalisé est préparé, dans lequel l'insaturation de la séquence B a été réduite à moins de 5 % de sa valeur d'origine.

22. Procédé selon l'une quelconque des revendications précédentes, dans lequel un copolymère séquencé fonctionnalisé est préparé, dans lequel l'insaturation moyenne du copolymère séquencé hydrogéné a été réduite à moins de 20 % de sa valeur d'origine.

23. Procédé selon l'une quelconque des revendications précédentes, dans lequel un copolymère séquencé fonctionnalisé est préparé, dans lequel une moyenne de moins de 10 % des unités hydrocarbonées monoalcényl-aromatiques ont été hydrogénées.

24. Procédé selon l'une quelconque des revendications précédentes, dans lequel un copolymère séquencé fonctionnalisé est préparé, dans lequel la séquence A a un poids moléculaire moyen situé dans un intervalle allant de 500 à 60.000.

25. Procédé selon l'une quelconque des revendications précédentes, dans lequel un copolymère séquencé fonctionnalisé est préparé, dans lequel la séquence B a un poids moléculaire moyen situé dans un intervalle allant de 35.000 à 150.000.

26. Procédé selon l'une quelconque des revendications précédentes, dans lequel un copolymère séquencé fonctionnalisé est préparé, dans lequel de 35 % à 50 % des unités butadiène ont une teneur en microstructure 1,2 avant hydrogénation.

27. Procédé selon l'une quelconque des revendications précédentes, dans lequel l'espèce électrophile est le dioxyde de carbone.

28. Procédé selon l'une quelconque des revendications précédentes, dans lequel l'espèce électrophile est

l'oxyde d'éthylène.

29. Procédé selon l'une quelconque des revendications précédentes, dans lequel les espèces électrophiles sont choisies dans le groupe constitué par les aldéhydes, les cétones et les acides carboxyliques et leurs sels et esters.

30. Procédé selon l'une quelconque des revendications précédentes, dans lequel les espèces électrophiles sont les époxydes.

31. Procédé selon l'une quelconque des revendications précédentes, dans lequel l'espèce électrophile est le soufre.

32. Procédé selon l'une quelconque des revendications précédentes, dans lequel l'espèce électrophile est un alcoxyde de bore.

33. Procédé selon l'une quelconque des revendications précédentes, dans lequel l'espèce électrophile est un isocyanate.

34. Procédé selon l'une quelconque des revendications précédentes, dans lequel l'électrophile est une molécule contenant du sillcium.

35. Procédé selon l'une quelconque des revendications précédentes, dans lequel l'espèce électrophile est un sulfonate.

36. Procédé pour la préparation d'un copolymère séquencé fonctionnalisé dans lequel les groupes fonctionnels sont des acides carboxyliques ou leurs sels ou esters.

37. Procédé pour la préparation d'un copolymère séquencé fonctionnalisé dans lequel les groupes fonctionnels sont des cétones.

38. Procédé pour la préparation d'un copolymère séquencé fonctionnalisé dans lequel les groupes fonctionnels sont des alcools et des alcoxydes.

39. Procédé pour la préparation d'un copolymère séquencé fonctionnalisé dans lequel les groupes fonctionnels sont des amines.

40. Procédé pour la préparation d'un copolymère séquencé fonctionnalisé dans lequel les groupes fonctionnels sont des groupes fonctionnels contenant un atome de silice.

41. Procédé pour la préparation d'un copolymère séquencé fonctionnalisé dans lequel les groupes fonctionnels sont des thiols.

42. Procédé pour la préparation d'un copolymère séquencé fonctionnalisé dans lequel les groupes fonctionnels sont des borates.

43. Procédé pour la préparation d'un copolymère séquencé fonctionnalisé dans lequel les groupes fonctionnels sont des amides.

44. Procédé pour la préparation d'un copolymère séquencé fonctionnalisé selon l'une quelconque des revendications précédentes, dans lequel la molécule greffée ou un de ses dérivés est présent en une quantité allant de 0,02 à 20 % en poids de la partie greffée.

45. Procédé pour la préparation d'un copolymère séquencé fonctionnalisé selon la revendication 44, dans lequel la molécule greffée ou un de ses dérivés est présent en une quantité allant de 0,1 à 10 % en poids.

46. Procédé pour la préparation d'un copolymère séquencé fonctionnalisé selon la revendication 45, dans lequel la molécule greffée ou son dérivé est présent(s) dans une quantité allant de 0,2 à 5 % en poids.

**47.** Procédé pour la préparation de compositions polymériques résistant aux impacts comprenant :
a) de 50 à 97 % d'un polyamide ayant un poids moléculaire moyen en nombre d'au moins 5.000,00 d'un polyester thermoplastique, et
b) de 3 à 50 % en poids du copolymère séquencé sélectivement hydrogéné fonctionnalisé selon l'une quelconque des revendications précédentes.

**48.** Procédé pour la préparation d'une composition polymérique résistant aux impacts selon la revendication 47, dans laquelle la résine polyamide est choisie dans le groupe constitué par le polyhexométhylène-sébacamide, le polycaprolactame, le polyhexaméthylène-isophtalamide, le polyhexaméthylène téré-co-isophtalamide et leurs mélanges et copolymères.

**49.** Procédé pour la préparation d'une composition polymérique résistant aux impacts selon les revendications 47 et 48, dans laquelle le polyester est le térephtalate de polybutylène.

**50.** Procédé pour la préparation d'une composition polymérique résistant aux impacts selon l'une quelconque des revendications 47 à 49, dans laquelle le polyester est le térephtalate de polyéthylène.

**Patentansprüche**
**Patentansprüche für folgende Vertragsstaaten : BE, CH, DE, FR, GB, IT, LI, NL, SE**

**1.** Funktionalisiertes, selektiv hydriertes Blockcopolymer der Formel

$B_n(AB)_oA_p$,

worin
n 0 oder eine ganze Zahl von mindestens 1 ist,
o eine ganze Zahl von mindestens I ist Und
p 0 oder eine ganze Zahl von mindestens 1 ist,
A Überwiegend einen polymerisierten, aromatischen Monoalkenylkohlenwasserstoffblock darstellt und
B vor der Hydrierung überwiegend ein polymerisierter konjugierter Dienkohlenwassserstoffblock ist,

auf welches Polymer mindestens ein elektrophiles pfropfbares Molekül oder ein Elektrophil gepfropft wurde, dadurch gekennzeichnet,daß im wesentlichen alle der genannten pfropfbaren Moleküle auf dem Monoalkenylarenblock im Blockcopolymer gepfropft sind.

**2.** Funktionalisiertes Blockcopolymer nach Anspruch 1, worin jeder Block A ein mittleres Molekulargewicht im Bereich von 1.000 bis 115.000 besitzt.

**3.** Funktionalisiertes Blockcopolymer nach Anspruch 1 oder 2, worin der genannte polymerisierte konjugierte Dienkohlenwasserstoffblock ein mittleres Molekulargewicht im Bereich von 20.000 bis 450.000 besitzt.

**4.** Funktionalisiertes Blockcopolymer nach Anspruch 1 oder 2, worin die Blöcke A im Bereich von 1 bis 95 Gew.-% des Copolymers bilden.

**5.** Funktionalisiertes Blockcopolymer nach einem der vorstehenden Ansprüche, worin die Unsättigung des Blocks B weniger als 20% der ursprünglichen Unsättigung beträgt.

**6.** Funktionalisiertes Blockcopolymer nach einem der vorstehenden Ansprüche, worin die Unsättigung der A-Blöcke über 50% der ursprünglichen Unsättigung beträgt.

**7.** Funktionalisiertes Blockcopolymer nach eine der vorstehenden Ansprüche, worin das gepfropfte Molekül eine oder mehrere funktionelle Gruppen enthält.

**8.** Funktionalisiertes Blockcopolymer nach einem der vorstehenden Ansprüche, worin vor der Hydrierung die polymeren Blöcke A polymere Blöcke aus einem aromatischen Monoalkenylkohlenwasserstoff sind.

9. Funktionalisiertes Blookcopolymer nach Anspruch 8, worin der aromatische Monoalkenylkohlenwasserstoff Styrol ist.

10. Funktionalisiertes Blockcopolymer nach einem der vorstehenden Ansprüche, worin das konjugierte Dien 1,3-Butadien ist.

11. Funktionalisiertes Blockcopolymer nach einem der vorstehenden Ansprüche, worin das Blockcopolymer ein Styrol-Ethylen/Butylen-Styrol-Blockcopolymer ist.

12. Funktionalisiertes Blockcopolymer nach einem der vorstehenden Ansprüche, worin die Blöcke A im Bereich von 1 bis 40 Gew.-% des Blockcopolymers umfassen.

13. Funktionalisiertes Blockcopolymer nach einem der vorstehenden Ansprüche, worin die Unsättigung des Blockes B auf weniger als 10% ihres ursprünglichen Wertes reduziert wurde.

14. Funktionalisiertes Blockcopolymer nach Anspruch 13, worin die Unsättigung des Blocks B auf weniger als 5% ihres ursprünglichen Wertes reduziert wurde.

15. Funktionalisiertes Blockcopolymer nach einem der vorstehenden Ansprüche, worin die durchschnittliche Unsättigung des hydrierten Blockcopolymers auf weniger als 20% ihres ursprünglichen Wertes reduziert wurde.

16. Funktionalisiertes Blockcopolymer nach einem der vorstehenden Ansprüche, worin im Durchschnitt weniger als 10% der aromatischen Monoalkenylkohlenwasserstoffeinheiten hydriert wurden.

17. Funktionalisiertes Blockcopolymer nach einem der vorstehenden Ansprüche, worin der Block A ein mittleres Molekulargewicht im Bereich von 500 bis 60.000 besitzt.

18. Funktionalisiertes Blockcopolymer nach einem der vorstehenden Ansprüche, worin der Block B ein mittleres Molekulargewicht im Bereich von 35.000 bis 150.000 besitzt.

19. Funktionalisiertes Blockcopolymer nach einem der vorstehenden Ansprüche, worin im Bereich von 35% bis 50% der Butadieneinheiten vor der Hydrierung einen 1,2-Mikrostrukturgehalt besitzen.

20. Funktionalisiertes Blockcopolymer nach einem der Ansprüche 1 bis 15, worin im Durchschnitt mehr als 25% der aromatischen Monoalkenylkohlenwasserstoffeinheiten hydriert wurden.

21. Funktionalisiertes Blockcopolymer nach einem der vorstehenden Ansprüche, worin das Elektrophil Kohlendioxid ist.

22. Funktionalisiertes Blockcopolymer nach einem der Ansprüche 1 bis 20, worin das Elektrophil Ethylenoxid ist.

23. Funktionalisiertes Blockcopolymer nach einem der Ansprüche 1 bis 20, worin die Elektrophile von der Gruppe bestehend aus Aldehyden, Ketonen und Carbonsäuren und Salzen und Estern hievon, ausgewählt sind.

24. Funktionalisiertes Blockcopolymer nach einem der Ansprüche 1 bis 20, worin die Elektrophile Epoxide sind.

25. Funktionalisiertes Blockcopolymer nach einem der Ansprüche 1 bis 20, worin das Elektrophil Schwefel ist.

26. Funktionalisiertes Blockcopolymer nach einem der Ansprüche 1 bis 20, worin das Elektrophil ein Boralkoxid ist.

27. Funktionalisiertes Blockcopolymer nach einem der Ansprüche 1 bis 20, worin das Elektrophil ein Isocyanat ist.

**28.** Funtionalisisertes Blockcopolymer nach einem der Ansprüche 1 bis 20, worin das Elektrophil ein Molekül ist, welches Silizium enthält.

**29.** Funktionalisiertes Blockcopolymer nach einem der Ansprüche 1 bis 20, worin das Elektrophil ein Sulfonat ist.

**30.** Funktionalisiertes Blockcopolymer nach einem der Ansprüche 7 bis 29, worin die funtionellen Gruppen Carbonsäuren oder Salze oder Ester hievon sind.

**31.** Funktionalisiertes Blockcopolymer nach einem der Ansprüche 7 bis 29, worin die funktionellen Gruppen Ketone sind.

**32.** Funktionalisiertes Blockcopolymer nach einem der Ansprüche 7 bis 29, worin die funktionellen Gruppen Alkohole und Alkoxide sind.

**33.** Funktionalisiertes Blockcopolymer nach einem der Ansprüche 7 bis 29, worin die funktionellen Gruppen Amine sind.

**34.** Funktionalisiertes Blockcopolymer nach einem der Ansprüche 7 bis 29, worin die funktionellen Gruppen ein Siliziumatom enthaltende funktionelle Gruppen sind.

**35.** Funktionalisiertes Blockcopolymer nach einem der Ansprüche 7 bis 29, worin die funktionellen Gruppen Thiole sind.

**36.** Funktionalisiertes Blockcopolymer nach einem der Ansprüche 7 bis 29, worin die funktionellen Gruppen Borate sind.

**37.** Funktionalisiertes Blockcopolymer nach einem der Ansprüche 7 bis 29, worin die funktionellen Gruppen Amide sind.

**38.** Funktionalisiertes Blockcopolymer nach einem der vorstehenden Ansprüche, worin das gepfropfte Molekül oder ein Derivat hievon in einer Menge im Bereich von 0,02 bis 20 Gew.-% des gepfropften Anteils vorliegt.

**39.** Funktionalisiertes Blockcopolymer nach Anspruch 38, worin das gepfropfte Molekül oder sein Derivat in einer Menge im Bereich von 0,1 bis 10 Gew.-% vorliegt.

**40.** Funktionalisiertes Blockcopolymer nach Anspruch 39, worin das gepfropfte Molekül oder sein Derviat in einer Menge im Bereich von 0,2 bis 5 Gew.-% vorliegt.

**41.** Schlagzähe polymere Zusammensetzungen, umfassend
a) im Bereich von 50 bis 97 % von einem Polyamid mit einem Zahlenmittel-Molekulargewicht von mindestens 5.000, oder von einem thermoplastischen Polyester, und
b) im Bereich von 3 bis 50 Gew.-% von einem funktionalisierten selektiv hydrierten Blockcopolymer nach einem der vorstehenden Ansprüche.

**42.** Schlagzähe polymere Zusammensetzung nach Anspruch 41, worin das Polyamid oder der Polyester in einer Menge im Bereich von 70 bis 95 Gew.-% vorliegt.

**43.** Schlagzähe polymere Zusammensetzung nach Anspruch 42, worin das Polyamid oder der Polyester in einer Menge im Bereich von 75 bis 90 Gew.-% vorliegt.

**44.** Schlagzähe polymere Zusammensetzung nach einem der Ansprüche 41 bis 43, worin das Polyamid Nylon 6,6 ist.

**45.** Schlagzähe polymere Zusammensetzung nach einem der Ansprüche 41 bis 43, worin das Polyamidharz von der Gruppe bestehend aus Polyhexamethylenadipinamid, Polyhexamethylensebacinamid, Polycaprolactam, Polyhexamethylenisophthalamid, Polyhexamethylen-tere-co-isophthalamid und Gemischen und Copolymeren hievon ausgewählt ist.

**46.** Schlazähe polmere Zusammensetzung nach einem der Ansprüche 41 bis 43, worin der Polyester Polybutylenterephthalat ist.

**47.** Schlagzähe polymere Zusammensetzung nach einem der Ansprüche 41 bis 43, worin der Polyester Polyethylenterephthalat ist.

**48.** Verfahren zur Herstellung eines funktionalisierten, selektiv hydrierten Blockcopolymers nach einem der Ansprüche 1 bis 40, welches Verfahren das In-Kontakt-Bringen von hydrierten Blockcopolymeren aus konjugierten Dienen und aromatischen Monoalkenylverbindungen mit einer Alkyllithiumverbindung und, wenn benötigt, einem polaren Metallierungspromotor, welcher von der Gruppe bestehend aus tertiären Aminen und Kohlenwasserstoffethern mit niedrigem Molekulargewicht ausgewählt ist, um ein Rückgratblockcopolymer auszubilden, welches entlang der Polymerkette aktive Lithiumatome enthält, und danach das In-Kontakt-Bringen des genannten Rückgratblockcopolymers mit mindestens einem elektrophilen pfropfbaren Molekül oder Elektrophil, um Rückgratblockcopolymere mit daran gebundenen gepfropften Molekülen auszubilden, umfaßt, worin im wesentlichen alle der genannten pfropfbaren Moleküle, welche aufgepfropft wurden, auf dem Monoalkenylarenblock im Blockcopolymer gepfropft sind.

**49.** Verfahren nach Anspruch 48, worin die polare Verbindung in einer Menge von 0,1 bis 10,0 Äquivalenten je Äquivalent an Lithiumalkyl vorliegt.

**50.** Verfahren nach Anspruch 49, worin die polare Verbindung in einer Menge im, Bereich von 1 bis 3 Äquivalenten je Äquivalent an Lithiumalkyl vorliegt.

**51.** Verfahren nach einem der Ansprüche 48 bis 50, worin die polare Verbindung N,N,N',N'-Tetramethylethylendiamin ist.

**52.** Verfahren nach einem der Ansprüche 48 bis 51, worin ein Molverhältnis von der genannten Alkyllithiumverbindung zu den Vinylareneinheiten im bereich von 0,001 bis 3 verwendet wird.

**53.** Verfahren nach Anspruch 52, worin das genannte Molverhältnis im Bereich von 0,01 bis 1,0 beträgt.

**54.** Verfahren nach einem der Ansprüche 48 bis 53, worin die genannte Alkyllithiumverbindung sec-Butyllithium ist.

**55.** Verfahren nach einem der Ansprüche 48 bis 54, worin der genannte Metal-lierungsschritt bei einer Temperatur im Bereich von 25°C bis 80°C ausgeführt wird.

**56.** Verfahren zur Herstellung von funktionalisierten, selektiv hydrierten Blockcopolymeren nach einem der Ansprüche 1 bis 40, welches Verfahren das In-Kontakt-Bringen von hydrierten Blockcopolymeren aus konjugierten Dienen und aromatischen Monoalkenylverbindungen mit tert.-Butyllithium, um ein Rückgratblockcopolymer mit aktiven Lithiumatomen entlang der Polymerkette auszubilden, und danach das In-kontakt-Bringen von mindestens einem elektrophilen pfropfbaren Molekül, welches nach Reaktion mit den aktiven Lithiumatomen funktionelle Gruppen bilden wird, welche von der Gruppe, bestehend aus Carboxylen, Alkoholen und Ethern ausgewählt sind, umfaßt, worin im wesentlichen alle der genannten Moleküle auf dem Monoalkenylarenblock im Blockcopolymer gepfropft sind.

**Patentansprüche für folgenden Vertragsstaat : AT**

**1.** Verfahren zur Herstellung eines funktionalisierten, selektiv hydrierten Blockcopolymers der Formel

$3_n(AB)_oA_p$,

worin

n O oder eine ganze Zahl von mindestens 1 ist,
o eine ganze Zahl von mindestens 1 ist und

- p O oder eine ganze Zahl von mindestens 1 ist,
- A überwiegend einen polymerisierten, aromatischen Monoalkenylkohlenwasserstoffblock darstellt und
- B vor der Hydrierung überwiegend ein polymerisierter konjugierter Dienkohlenwwasserstoffblock ist,

welches Verfahren das In-Kontakt-Bringen von hydrierten Blockcopolymeren aus konjugierten Dienen und aromatischen Monoalkenylverbindungen mit einer Alkyllithiumverbindung ung, wenn benötigt, einem polaren Metallierungspromotor, welcher von der Gruppe bestehend aus tertiären Aminen und Kohlenwasserstoffethern mit niedrigem Molekulargewicht ausgewählt ist, um ein Rückgratblockcopolymer auszubilden, welches entlang der Polymerkette aktive Lithiumatome enthält, und danach das In-Kontakt-Bringen des genannten Ruckgratblockcopolymers mit mindestens einem elektrophilen pfropfbaren Molekül oder Elektrophil, um Rückgratblockcopolymere mit daran gebundenen gepfropften Molekülen auszubilden, umfaßt, worin im wesentlichen alle der genannten pfropfbaren Moleküle, welche aufgepfropft wurden, auf dem Monoalkenylarenblock im Blockcopolymer gepfropft sind.

**2.** Verfahren nach Anspruch 1, worin die polare Verbindung in einer Menge von 0,1 bis 10,0 Äquivalenten je Äquivalent an Lithiumalkyl vorliegt.

**3.** Verfahren nach Anspruch 2, worin die polare Verbindung in einer Menge im Bereich von 1 bis 3 Äquivalenten je Äquivalent an Lithiumalkyl vorliegt.

**4.** Verfahren nach einem der Ansprüche 1 bis 3, worin die polare Verbindung N,N,N',N'-Tetramethylethylendiamin ist.

**5.** Verfahren nach einem der Ansprüche 1 bis 4, worin ein Molverhältnis von der genannten Alkyllithiumverbindung zu den Vinylareneinheiten im Bereich von 0,001 bis 3 verwendet wird.

**6.** Verfahren nach Anspruch 5, worin das genannte Molverhältnis Bereich von 0,01 bis 1,0 beträgt.

**7.** Verfahren nach einem der Ansprüche 1 bis 6, worin die genannte Alkyllithiumverbindung sec-Butyllithium ist.

**8.** Verfahren nach einem der Ansprüche 1 bis 7, worin der genannte Metallierungsschritt bei einer Temperatur im Bereich von 25°C bis 80°C ausgeführt wird.

**9.** Verfahren nach einem der Ansprüche 1 bis 8, welches Verfahren das In-Kontakt-Bringen von hydrierten Blockcopolymeren aus konjugierten Dienen und aromatischen Monoalkenylverbindungen mit tert.-Butyllithium, um ein Rückgratblockpolymer mit aktiven Lithiumatomen entlang der Polymerkette auszubilden, und danach das In-Kontakt-Bringen mit mindestens einem elektrophilen pfropfbaren Molekül, welches nach Reaktion mit den aktiven Lithiumatomen funktionelle Gruppen bilden wird, welche von der Gruppe, bestehend aus Carboxylen, Alkoholen und Ethern ausgewählt sind, umfaßt, worin im wesentlichen alle der genannten Moleküle auf dem Monoalkenylarenblock im Blockcopolymer gepfropft sind.

**10.** Verfahren nach den Ansprüchen 1 bis 9, worin ein funktionalisiertes Blockcopolymer hergestellt wird, worin jeder Block A ein mittleres Molekulargewicht im Bereich von 1.000 bis 115.000 besitzt.

**11.** Verfahren nach den Ansprüchen 1 bis 9, worin der genannte polymerisierte konjugierte Dienkohlenwasserstoffblock ein mittleres Molekulargewicht im Bereich von 20.000 bis 450.000 besitzt.

**12.** Verfahren nach den Ansprüchen 1 bis 9, worin die Blöcke A im Bereich 1 bis 95 Gew.-% des Copolymers bilden.

**13.** Verfahren nach den Ansprüchen 1 bis 9, worin ein funktionalisiertes Blockcopolymer hergestellt wird, worin die Unsättigung des Blocks B weniger als 20% der ursprünglichen Unsättigung beträgt.

**14.** Verfahren nach den Ansprüchen 1 bis 9, worin ein funktionalisiertes Blockcopolymer hergestellt wird, worin die Unsättigung der A-Blöcke über 50% der ursprünglichen Unsättigung beträgt.

15. Verfahren nach den Ansprüchen 1 bis 9, worin ein funktionalisiertes Blockcopolymer hergestellt wird, worin das gepfropfte Molekül eine oder mehrere funktionelle Gruppen enthält.

16. Verfahren nach den Ansprüchen 1 bis 9, worin ein funktionalisiertes Blockcopolymer hergestellt wird, worin der aromatische Monoalkenylkohlenwasserstoff Styrol ist.

17. Verfahren nach den Ansprüchen 1 bis 9, worin ein funktionalisiertes Blockcopolymer hergestellt wird, worin das konjugierte Dien 1,3-Butadien ist.

18. Verfahren nach den Ansprüchen 1 bis 9, worin ein funktionalisiertes Blockcopolymer hergestellt wird, worin das Blockcopolymer ein Styrol-Ethylen/-Butylen-Styrol-Blockcopolymer ist.

19. Verfahren nach den Ansprüchen 1 bis 9, worin ein funktionalisiertes Blockcopolymer hergestellt wird, worin die Blöcke A im Bereich von 1 bis 40 Gew.-% des Blockcopolymers umfassen.

20. Verfahren nach den Ansprüchen 1 bis 9, worin ein funktionalisiertes Blockcopolymer hergestellt wird, worin die Unsättigung des Blockes B auf weniger als 10% ihres ursprünglichen Werts reduziert wurde.

21. Verfahren nach Anspruch 20, worin ein funktionalisiertes Blockcopolymer hergestellt wird, worin die Unsättigung des Blocks B auf weniger als 5% ihres ursprünglichen Wertes redusiert wurde.

22. Verfahren nach einem der vorstehenden Ansprüche, worin ein funktionalisiertes Blockcopolymer hergestellt wird, worin die durchschnittliche Unsättigung des hydrierten Blockcopolymers auf weniger als 20% ihres ursprünglichen Wertes reduziert wurde.

23. Verfahren nach einem der vorstehenden Ansprüche, worin ein funktionalisiertes Blockcopolymer hergestellt wird, worin im Durchschnitt weniger als 10% der aromatischen Monoalkenykohlenwasserstoffeinheiten hydriert wurden.

24. Verfahren nach einem der vorstehenden Ansprüche, worin ein funktionalisiertes Blockcopolymer hergestellt wird, worin der Block A ein mittleres Molekulargewicht im Bereich von 500 bis 60.000 besitzt.

25. Verfahren nach einem der vorstehenden Ansprüche, worin ein funktionalisiertes Blockcopolymer hergestellt wird, worin der Block B ein mittleres Molekulargewicht im Bereich von 35.000 bis 150.000 besitzt.

26. Verfahren nach einem der vorstehenden Ansprüche, worin ein funktionalisiertes Blockcopolymer hergestellt wird, worin im Bereich von 35% bis 50% der Butadieneinheiten vor der Hydrierung einen 1,2-Mikrostrukturgehalt besitzen.

27. Verfahren nach einem der vorstehenden Ansprüche, worin das Elektrophil Kohlendioxid ist.

28. Verfahren nach einem der vorstehenden Ansprüche, worin das Elektrophil Ethylenoxid ist.

29. Verfahren nach einem der vorstehenden Ansprüche, worin die Elektrophile von der Gruppe bestehend aus Aldehyden, Ketonen und Carbonsäuren und Salzen und Estern hievon, ausgewählt sind.

30. Verfahren nach einem der vorstehenden Ansprüche, worin die Elektrophile Epoxide sind.

31. Verfahren nach einem der vorstehenden Ansprüche, worin das Elektrophil Schwefel ist.

32. Verfahren nach einem der vorstehenden Ansprüche, worin das Elektrophil ein Boralkoxid ist.

33. Verfahren nach einem der vorstehenden Ansprüche, worin das Elektrophil ein Isocyanat ist.

34. Verfahren nach einem der vorstehenden Ansprüche, worin das Elektrophil ein Molekül ist, welches Silizium enthält.

35. Verfahren nach einem der vorstehenden Ansprüche, worin das Elektrophil ein Sulfonat ist.

36. Verfahren zur Herstellung eines funktionalisierten Blockcopolymers, worin die funktionellen Gruppen Carbonsäuren oder Salze oder Ester hievon sind.

37. Verfahren zur Herstellung eines funktionalisierten Blockcopolymers, worin die funktionellen Gruppen Ketone sind.

38. Verfahren zur Herstellung eines funktionalisierten Blockcopoloymers, worin die funktionellen Gruppen Alkohole und Alkoxide sind.

39. Verfahren zur Herstellung eines funktionalisierten Blockcoploymers, worin die funktionellen Gruppen Amine sind.

40. Verfahren zur Herstellung eines funktionalisierten Blockcopolymers, worin die funktionellen Gruppen ein Siliziumatom enthaltende funktionelle Gruppen sind.

41. Verfahren zur Herstellung eines funktionalisierten Blockcopolymers, worin die funktionellen Gruppen Thiole sind.

42. Verfahren zur Herstellung eines funktionalisierten Blockcopolymers, worin die funktionellen Gruppen Bcrate sind.

43. Verfahren zur Herstellung eines funktionalisierten Blockcopolymers, worin die funktionellen Gruppen Amide sind.

44. Verfahren zur Herstellung eines funktionalisierten Blockcopolymers nach einem der vorstehenden Ansprüche, worin das gepfropfte Molekül oder ein Derivat hievon in einer Menge im Bereich von 0,02 bis 20 Gew.-% des gepfropften Anteils vorliegt.

45. Verfahren zur Herstellung eines funktionalisierten Blockcopolymers nach Ansprüch 44, worin das gepfropfte Molekül oder sein Derivat in einer Menge im Bereich von 0,1 bis 10 Gew.-% vorliegt.

46. Verfahren zur Herstellung eines funktionalisierten Blockcopolymers nach Anspruch 45, worin das gepfropfte Molekül oder Derviat in einer Menge im Bereich von 0,2 bis 5 Gew.-% vorliegt.

47. Verfahren zur Herstellung von schlagzähen polymeren Zusammensetzungen, umfassend
a) im Bereich von 50 bis 97 % von einem Polyamid mit einem Zahlenmittel-Molekulargewicht von mindestens 5.000, oder einem thermoplastischen Polyester, und
b) im Bereich von 3 bis 50 Gew.-% von einem funktionalisierten selektiv hydrierten Blockcopolymer nach einem der vorstehenden Ansprüche.

48. Verfahren zur Herstellung einer schlagzähen polymeren Zusammensetzung nach Anspruch 47, worin das Polyamidharz von der Gruppe bestehend aus Polyhexamethylenadipinamid, Polyhexamethylensebacinamid, Polycaprolactam, Polyhexamethylenisophthalamid, Ployhexamethylen-tere-co-isophthalamid und Gemischen und Copolymeren hievon ausgewählt ist.

49. Verfahren zur Herstellung einer schlagzähen polymeren Zusammensetzung nach den Ansprüchen 47 und 48, worin der Polyester Polybutylenterephthalat ist.

50. Verfahren zur Herstellung einer schlagzähen polymeren Zusammensetzung nach einem der Ansprüche 47 bis 49, worin der Polyester Polyethylenterephthalat ist.